(19) **Europäisches Patentamt**
**European Patent Office**
**Office européen des brevets**

(11) **EP 3 930 151 A1**

(12) **EUROPEAN PATENT APPLICATION**
published in accordance with Art. 153(4) EPC

(43) Date of publication:
**29.12.2021 Bulletin 2021/52**

(21) Application number: **20778943.9**

(22) Date of filing: **23.03.2020**

(51) Int Cl.:
*H02K 1/27* (2006.01)    *F04B 39/00* (2006.01)
*H02K 1/22* (2006.01)    *H02K 21/14* (2006.01)
*H02P 27/06* (2006.01)

(86) International application number:
**PCT/JP2020/012648**

(87) International publication number:
**WO 2020/196380 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2019  JP 2019062129**

(71) Applicant: **DAIKIN INDUSTRIES, LTD.**
**Osaka-shi, Osaka 530-8323 (JP)**

(72) Inventors:
• **NAKATA Tomoki**
**Osaka-shi, Osaka 530-8323 (JP)**
• **ARAKI Takeshi**
**Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRIC MOTOR AND ELECTRIC MOTOR SYSTEM PROVIDED WITH SAME**

(57)    A shaft (10) is rotatably supported on a rotor core (40) only on one side of an axial direction. In a case in which each of magnetic poles (43) is divided into two, which are a rotation direction side and a reverse rotation direction side, relative to a pole center of the magnetic pole (43), a rotor core (40) has magnetic saturation promoting means (50) by which a half portion (43a) on the rotation direction side of at least one of the magnetic poles (43) each including a corresponding one of permanent magnets (42) is likely to be magnetically saturated. The magnetic saturation promoting means (50) is provided in a more radially outward direction than the permanent magnet (42). A shape of the half portion (43a) on the rotation direction side and a shape of a half portion (43b) on the reverse rotation direction side are asymmetric about a straight line (L1) passing through the pole center of the magnetic pole (43) and an axial center (O) of a rotor (12).

FIG.25

**EP 3 930 151 A1**

**Description**

Technical Field

The present disclosure relates to an electric motor and an electric motor system provided with the same.

Background Art

PTL 1 discloses an electric motor including a rotor core in which a plurality of magnet insertion holes are formed. The electric motor according to PTL 1 is provided with a plurality of slits in a radially outward direction of the magnet insertion holes in the rotor core, and the slits have a first portion and a second portion. The distance from a magnetic pole center line to the first portion increases from a radially inward direction toward the radially outward direction. The distance from the magnetic pole center line to the second portion is fixed from the radially inward direction toward the radially outward direction. Such a structure can reduce vibration of the electric motor according to PTL 1.

Citation List

Patent Literature

PTL 1: Japanese Unexamined Patent Application Publication No. 2017-108626

Summary of Invention

Technical Problem

The inventors of the present application have found out that unbalanced magnetic pull generated in the electric motor increases the load on the shaft of the rotor in the radial direction, which leads to an issue, in particular, when the shaft is supported on the rotor core only on one side of the axial direction. Note that "unbalanced magnetic pull" refers to a magnetic force that is generated between the rotor and a stator so as to enhance a displacement when the rotor is displaced in the radial direction relatively to the stator.
An object of the present disclosure is to reduce the unbalanced magnetic pull generated in the electric motor.

Solution to Problem

A first aspect of the present disclosure is directed to an electric motor (1) including a rotor (12) and a stator (11). The rotor (12) has a rotor core (40), a shaft (10) inserted into and fixed to the rotor core (40), and a plurality of permanent magnets (42) forming a plurality of magnetic poles (43) arranged in a circumferential direction. The magnetic poles (43) are regions obtained by dividing the rotor (12) in the circumferential direction depending on whether a magnetic field direction on a surface of the rotor (12) is a radially outward direction or a radially inward direction. The shaft (10) is rotatably supported on the rotor core (40) only on one side of an axial direction. In a case in which each of the magnetic poles (43) is divided into two, which are a rotation direction side and a reverse rotation direction side, relative to a pole center of the magnetic pole (43), the rotor core (40) has magnetic saturation promoting means (50) by which a half portion (43a) on the rotation direction side of at least one of the magnetic poles (43) each including a corresponding one of the permanent magnets (42) is likely to be magnetically saturated. The magnetic saturation promoting means (50) is provided in a more radially outward direction than the permanent magnet (42). A shape of the half portion (43a) on the rotation direction side and a shape of a half portion (43b) on the reverse rotation direction side are asymmetric about a straight line (L1) passing through the pole center of the magnetic pole (43) and an axial center (O) of the rotor (12).
In the first aspect, by the magnetic saturation promoting means (50), the half portion (43a) on the rotation direction side of the magnetic pole (43) is likely to be magnetically saturated. This can reduce unbalanced magnetic pull generated in the electric motor (1).
According to a second aspect of the present disclosure, in the first aspect, the magnetic saturation promoting means (50) is a magnetic resistance portion (51, 52) provided in the half portion (43a) on the rotation direction side of the magnetic pole (43) in a more radially outward direction than the permanent magnet (42) in the rotor core (40).
In the second aspect, by the magnetic resistance portion (51, 52), the half portion (43a) on the rotation direction side of the magnetic pole (43) is likely to be magnetically saturated.
According to a third aspect of the present disclosure, in the second aspect, the magnetic resistance portion (51, 52) is arranged between a straight line (L2) passing through an end portion on the rotation direction side in the permanent magnet (42) of the magnetic pole (43) and the axial center (O) of the rotor (12) and the straight line (L1) passing through the pole center of the magnetic pole (43) and the axial center (O) of the rotor (12).

In the third aspect, by devising the arrangement of the magnetic resistance portion (51, 52), the unbalanced magnetic pull can be further reduced.

According to a fourth aspect of the present disclosure, in the second or third aspect, the magnetic resistance portion (51, 52) is a cavity (51) formed in the rotor core (40) .

In the fourth aspect, the magnetic resistance portion (51, 52) can be formed by the cavity (51) at a low cost.

According to a fifth aspect of the present disclosure, in the second or third aspect, the magnetic resistance portion (51, 52) is a concave portion (52) formed on an outer circumferential surface of the rotor core (40).

In the fifth aspect, the magnetic resistance portion (51, 52) can be formed by the concave portion (52) at a low cost.

According to a sixth aspect of the present disclosure, in the first aspect, in the rotor core (40), at least part of the half portion (43a) on the rotation direction side of the magnetic pole (43), the part being in a more radially outward direction than the permanent magnet (42), is an easy magnetic saturation portion (53) formed of a magnetic material having a lower saturation magnetic flux density than a magnetic material forming a portion other than the half portion (43a), and the magnetic saturation promoting means (50) includes the easy magnetic saturation portion (53) .

In the sixth aspect, by the easy magnetic saturation portion (53), the half portion (43a) on the rotation direction side of the magnetic pole (43) is likely to be magnetically saturated.

According to a seventh aspect of the present disclosure, in any one of the first to sixth aspects, the rotor (12) has a weight (13a, 13c) provided on at least one of an end side of the axial direction and another end side of the axial direction of the rotor core (40), and a center of gravity of the weight (13a, 13c) is decentered from the axial center (O) of the rotor (12).

In the seventh aspect, even if the weight (13a, 13c) having the center of gravity decentered from the axial center (O) of the rotor (12) is provided, since the unbalanced magnetic pull is reduced, an axial runout of the shaft (10) can be suppressed.

An eighth aspect of the present disclosure is directed to a compressor (100). The compressor (100) includes a casing (15), the electric motor (1) according to any one of the first to seventh aspects accommodated in the casing (15), and a compression mechanism (20) accommodated in the casing (15) and configured to be driven by the electric motor (1).

In the eighth aspect, even if the compression mechanism (20) is rotationally driven at a high speed by the electric motor (1), since the unbalanced magnetic pull is unlikely to be generated in the electric motor (1), the compression mechanism (20) can be appropriately driven with the axial runout of the shaft (10) suppressed.

A ninth aspect of the present disclosure is directed to an electric motor system (MS) including the electric motor (1) according to any one of the first to seventh aspects, the electric motor (1) being an electric motor configured to drive a load (20) by using rotation of the shaft (10), an inverter (210b) configured to output an application voltage (Vs), which is a voltage to be applied to the electric motor (1), and a control unit (209) configured to control the inverter (210b). The control unit (209) is configured to cause the inverter (210b) to output the application voltage (Vs) having an amplitude smaller than a first maximum ($V_{max\_\omega MAX}$) and cause the electric motor (1) to rotate at a first speed ($\omega_{MAX}$) and drive the predetermined load (20), and cause the inverter (210b) to output the application voltage (Vs) having an amplitude of a second maximum ($V_{max\_}\omega 3$) and cause the electric motor (1) to rotate at a second speed ($\omega 3$) and drive the predetermined load (20). The first maximum ($V_{max\_\omega MAX}$) is a possible maximum value of an amplitude ($|Vs|$) of the application voltage when the electric motor (1) drives the predetermined load (20) at the first speed ($\omega_{MAX}$). The first speed ($\omega_{MAX}$) is a maximum of a speed ($\omega_m$) of rotation of the electric motor when the electric motor (1) drives the predetermined load (20). The second maximum ($V_{max\_}\omega 3$) is a possible maximum value of the amplitude ($|Vs|$) of the application voltage when the electric motor (1) drives the predetermined load (20) at the second speed ($\omega 3$). The second speed ($\omega 3$) is lower than the first speed ($\omega_{MAX}$).

In the ninth aspect, by the predetermined control of the inverter (210b) by the control unit (209), the unbalanced magnetic pull generated in the electric motor (1) can be reduced.

A tenth aspect of the present disclosure is directed to an electric motor system (MS) including the electric motor (1) according to any one of claims 1 to 7, the electric motor (1) being an electric motor configured to drive a load (20) by using rotation of the shaft (10), an inverter (210b) configured to output an application voltage (Vs), which is a voltage to be applied to the electric motor (1), and a control unit (209) configured to control the inverter (210b). In a case in which a speed ($\omega_m$) of rotation of the electric motor (1) when the electric motor (1) outputs a predetermined torque is higher than or equal to a base speed ($\omega b$) of the electric motor (1) when the electric motor (1) outputs the predetermined torque, the control unit (209) is configured to cause the inverter (210b) to output the application voltage (Vs) having an amplitude obtained by multiplying a first maximum ($V_{max\_}\omega 1$) by a first ratio, cause the electric motor (1) to rotate at a first speed ($\omega 1$), and cause the electric motor (1) to output the predetermined torque, and cause the inverter (210b) to output the application voltage (Vs) having an amplitude obtained by multiplying a second maximum ($V_{max\_}\omega 2$) by a second ratio, cause the electric motor (1) to rotate at a second speed ($\omega 2$), and cause the electric motor (1) to output the predetermined torque. The first maximum ($V_{max\_\omega1}$) is a possible maximum value of an amplitude (|Vs|) of the application voltage when the electric motor (1) outputs the predetermined torque at the first speed ($\omega1$). The second maximum ($V_{max\_\omega2}$) is a possible maximum value of the amplitude (|Vs|) of the application voltage when the electric motor (1) outputs the predetermined torque at the second speed ($\omega2$). The second speed ($\omega2$) is higher than the first speed ($\omega1$). The second ratio is smaller than the first ratio.

In the tenth aspect, by the predetermined control of the inverter (210b) by the control unit (209), the unbalanced magnetic pull generated in the electric motor (1) can be reduced.

Brief Description of Drawings

Fig. 1 is a sectional view illustrating an example of a structure of a compressor according to a first embodiment.

Fig. 2 is a block diagram illustrating a motor and a configuration of a motor driving apparatus that drives the motor.

Fig. 3 is graphs illustrating relationships between control employed in an embodiment and a rotational speed as solid lines.

Fig. 4 is a flowchart illustrating control of an output circuit by a controller.

Fig. 5 is a graph illustrating a relationship between an axial deviation and a driving voltage in which the rotational speed is a parameter.

Fig. 6 is a graph illustrating a relationship between a current amplitude and the axial deviation in which the rotational speed is a parameter.

Fig. 7 is a graph illustrating a relationship between the rotational speed and the current amplitude when a torque is a predetermined value.

Fig. 8 is a graph illustrating a relationship between a phase of a current vector and the axial deviation in which the rotational speed is a parameter.

Fig. 9 is a graph illustrating a relationship between the rotational speed and the phase when the torque is a predetermined value.

Fig. 10 is a graph illustrating a relationship between a d-axis current and the axial deviation in which the rotational speed is a parameter.

Fig. 11 is a graph illustrating a relationship between a q-axis current and the axial deviation in which the rotational speed is a parameter.

Fig. 12 is a graph illustrating a relationship between the rotational speed and the q-axis current when the torque is a predetermined value.

Fig. 13 is a vector diagram illustrating a relationship between a field magnetic flux vector, a magnetic flux vector attributed to an armature reaction, and a primary magnetic flux vector.

Fig. 14 is a graph illustrating a relationship between a T-axis current and the axial deviation in which the rotational speed is a parameter.

Fig. 15 is a graph illustrating a relationship between the rotational speed and the T-axis current when the torque is a predetermined value.

Fig. 16 is a graph illustrating a relationship between a primary magnetic flux and the axial deviation in which the rotational speed is a parameter.

Fig. 17 is a graph illustrating a relationship between the rotational speed and the primary magnetic flux when the torque is a predetermined value.

Fig. 18 is a graph illustrating a relationship between a load angle and the axial deviation in which the rotational speed is a parameter.

Fig. 19 is a graph illustrating a relationship between the rotational speed and the load angle when the torque is a predetermined value.

Fig. 20 is a graph illustrating a relationship between an instantaneous actual electric power and the axial deviation in which the rotational speed is a parameter.

Fig. 21 is a graph illustrating a relationship between the rotational speed and the instantaneous actual electric power Po when the torque is a predetermined value.

Fig. 22 is a block diagram illustrating a first modification of the controller.

Fig. 23 is a block diagram illustrating a second modification of the controller.

Fig. 24 is a plan view illustrating a structure of an electric motor according to the first embodiment.

Fig. 25 is a plan view of a rotor according to the first embodiment.

Fig. 26 is a plan view for explaining a definition of magnetic poles of the rotor.

Fig. 27 is a plan view of a rotor according to a modification of the first embodiment.

Fig. 28 is a plan view of a rotor according to a second embodiment.

Fig. 29 is a plan view of a rotor according to a third embodiment.

Description of Embodiments

<<First Embodiment>>

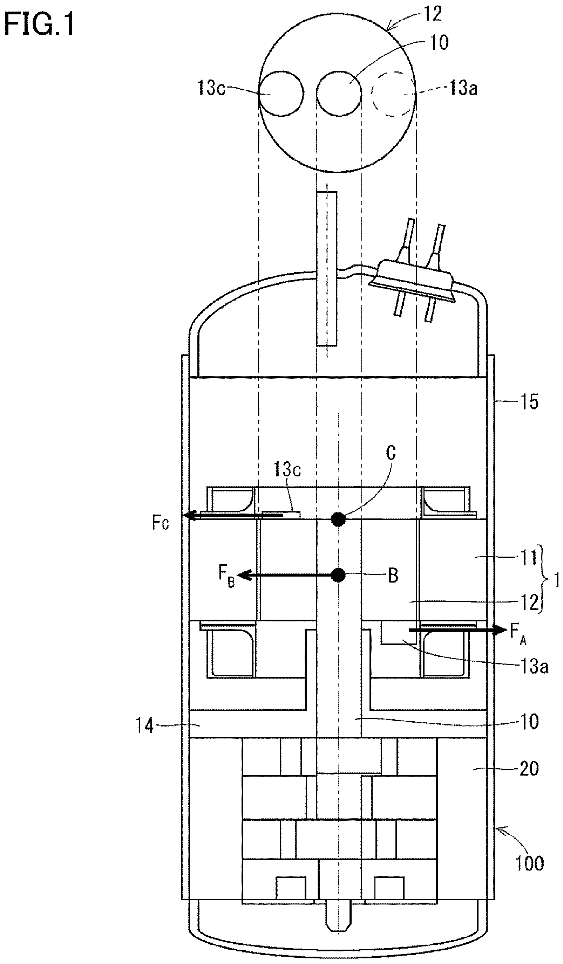

Fig. 1 is a sectional view illustrating an example of a structure of a compressor (100) employed for a refrigeration circuit, such as a heat pump. The compressor (100) includes a compression mechanism (20), an electric motor (1), a bearing (14), and a casing (15). The compression mechanism (20) compresses refrigerant (omitted from illustration). For example, a swing type is employed for the compression mechanism (20), and refrigerant is compressed by rotation transferred from the electric motor (1) via a shaft (10). The compression mechanism (20) is a load driven by the electric motor (1).

The electric motor (1) includes a stator (11) and a rotor (12). For example, the stator (11) and the rotor (12) are an armature and a field element, respectively. For example, the electric motor (1) is an inner-rotor type interior magnet synchronous motor, and the rotor (12) has a permanent magnet (omitted from illustration) that generates a field magnetic flux.

The rotor (12) includes a rotor core (40) and the shaft (10) that is inserted into and fixed to the rotor core (40). The shaft (10) is rotatably attached to the casing (15) by the bearing (14). The shaft (10) is rotatably supported on the rotor core (40) only on one side of the axial direction (in this example, only a down side of the vertical direction).

A balance weight (13a) is provided on the compression mechanism (20) side of the rotor (12) in the direction of the shaft (10) (hereinafter "axial direction"). A balance weight (13c) is provided on the opposite side to the compression mechanism (20) of the rotor (12) in the axial direction. The centers of gravity of the balance weights (13a, 13c) are eccentric in the opposite directions from a shaft center (O). Each of the balance weights (13a, 13c) forms a weight.

For convenience of description of the structure, above the sectional view in Fig. 1, a top view of the rotor (12) (view of the rotor (12) seen from the opposite side to the compression mechanism (20) in the axial direction) is illustrated by being combined with the section of the rotor (12) by four imaginary lines, which are chain lines. Note that the structure of the electric motor (1) will be described later in detail.

Rotation of the rotor (12) (hereinafter also referred to as rotation of the electric motor (1)) causes centrifugal forces $F_A$ and $F_C$ to act on the balance weights (13a, 13c), respectively. Unbalanced magnetic pull $F_B$ acts on the shaft (10). The unbalanced magnetic pull $F_B$ is a component in a radial direction, i.e., a component in the direction orthogonal to the axial direction, attributed to an imbalance in magnetic pull between the stator (11) and the rotor (12). Only this component is focused herein because a deflection amount (hereinafter referred to as "axial deviation") generated by the centrifugal forces $F_A$ and $F_C$ acting in the radial direction and also a stress applied in the radial direction on the shaft (10) is studied. For convenience, the unbalanced magnetic pull $F_B$ is illustrated as acting at a position B of the shaft (10) in the center of the rotor (12) in the axial direction.

As the speed of rotation (hereinafter also referred to as "rotational speed") of the motor (1) is higher, the centrifugal forces $F_A$ and $F_C$ are larger. As the rotational speed is higher, the axial deviation is larger. The axial deviation is a factor of a so-called uneven contact, which is an event in which a radial stress given from the shaft (10) to the bearing (14) becomes strong at a specific rotational angle.

In order to enhance the performance of the refrigeration circuit, the rotational speed is desirably high. In other words, a small axial deviation is advantageous in enhancing the performance of the refrigeration circuit.

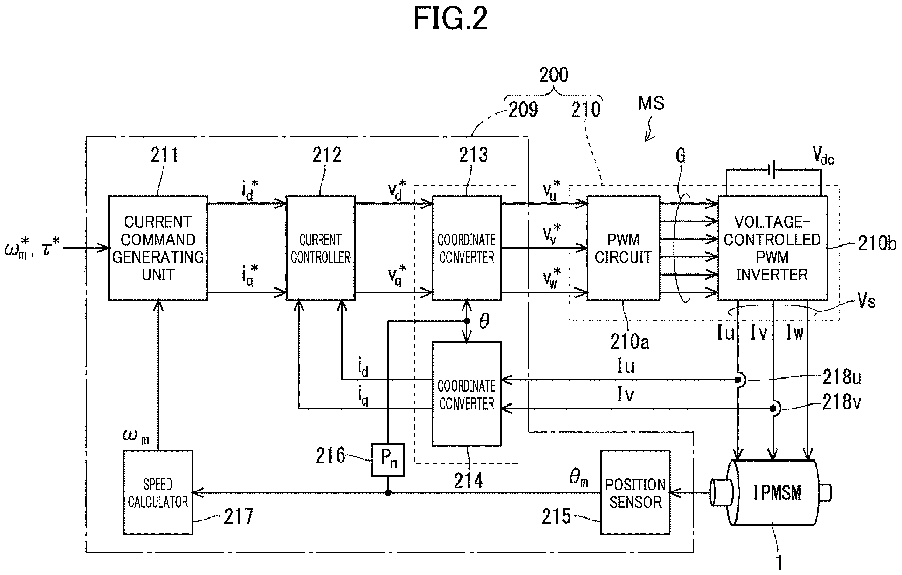

In the following embodiment, a motor driving technique for reducing the axial deviation is introduced. Fig. 2 is a block diagram illustrating a configuration of an electric motor system (MS). The electric motor system (MS) includes the electric motor (1) and a motor control apparatus (200) that drives the electric motor (1). Herein, an example of a case in which the electric motor (1) is a three-phase interior magnet synchronous motor (denoted as IPMSM in the figure) is illustrated. The motor control apparatus (200) converts three-phase alternating currents Iu, Iv, and Iw output to the electric motor (1) into a d-axis component (hereinafter "d-axis current") $i_d$ and a q-axis component (hereinafter "q-axis current") $i_q$ and performs vector control. The "d-axis" and "q-axis" herein indicate coordinate axes that advance in the same phase as the field magnetic flux of the electric motor (1) and 90 degrees with respect to this. The d-axis current $i_d$ contributes to the field magnetic flux, and the q-axis current $i_q$ contributes to a torque output from the electric motor (1).

The motor control apparatus (200) includes an output circuit (210) and a controller (209) that controls operation of the output circuit (210). The output circuit (210) outputs, to the electric motor (1), an application voltage Vs to be applied to the electric motor (1). The electric motor (1) is, for example, driven with the rotational speed controlled by the application voltage Vs. For example, the output circuit (210) performs DC/AC conversion on a direct-current voltage Vdc and outputs the three-phase application voltage Vs to the electric motor (1). The output circuit (210) supplies the three-phase alternating currents Iu, Iv, and Iw to the electric motor (1). The controller (209) constitutes a control unit.

The output circuit (210) includes a pulse-width modulation circuit (displayed as "PWM circuit" in the figure) 210a and a voltage-controlled PWM inverter (210b). The pulse-width modulation circuit (210a) receives three-phase voltage

command values $v_u^*$, $v_v^*$, and $v_w^*$ and generates a gate signal G for controlling operation of the PWM inverter (210b). Note that an inverter of other modulation type may also be employed instead of the PWM inverter (210b). The PWM inverter (210b) constitutes an inverter.

The direct-current voltage Vdc is supplied to the PWM inverter (210b) from a direct-current power source. The PWM inverter (210b) performs operation controlled by the gate signal G, converts the direct-current voltage Vdc into the application voltage Vs, and applies it to the electric motor (1). The three-phase alternating currents Iu, Iv, and Iw are supplied from the PWM inverter (210b) to the motor (1). The voltage command values $v_u^*$, $v_v^*$, and $v_w^*$ are command values of the application voltage Vs.

Although the power source that supplies the direct-current voltage Vdc is provided outside the motor control apparatus (200) in Fig. 2, the power source may alternatively be included in the motor control apparatus (200). The power source can be, for example, an AC/DC converter.

The controller (209) includes, for example, a current command generating unit (211), a current controller (212), coordinate converters (213, 214), a position sensor (215), a multiplier (216), and a speed calculator (217).

Current sensors (218u, 218v) sense the alternating currents Iu and Iv, respectively. The controller (209) may alternatively include the current sensors (218u, 218v). The position sensor (215) senses the rotation position of the electric motor (1) as a rotational angle $\theta_m$ at the mechanical angle. The multiplier (216) multiplies the rotational angle $\theta_m$ by a number of pole pairs $P_n$ to obtain a rotational angle $\theta$ as an electric angle. The coordinate converter (214) receives the values of the alternating currents Iu and Iv and the rotational angle $\theta$ and obtains the d-axis current $i_d$ and the q-axis current $i_q$.

The speed calculator (217) obtains, from the rotational angle $\theta_m$, a rotational speed $\omega_m$ at a mechanical angle. The current command generating unit (211) receives a torque command $\tau^*$ or the rotational speed $\omega_m$ and its command value $\omega_m^*$, and obtains, from these, a command value $i_d^*$ of the d-axis current $i_d$ and a command value $i_q^*$ of the q-axis current $i_q$. The torque command $\tau^*$ is a command value of a torque $\tau$ output from the electric motor (1).

From the d-axis current $i_d$ and its command value $i_d^*$ and the q-axis current $i_q$ and its command value $i_q^*$, the current controller (212) obtains a command value $v_d^*$ of a d-axis voltage $v_d$ and a command value $v_q^*$ of a q-axis voltage $v_q$. For example, the command values $v_d^*$ and $v_q^*$ can be obtained by feedback control for making the deviation between the d-axis current $i_d$ and its command value $i_d^*$ and the deviation between the q-axis current $i_q$ and its command value $i_q^*$ close to zero.

From the command value $v_d^*$ of the d-axis voltage $v_d$, the command value $v_q^*$ of the q-axis voltage $v_q$, and the rotational angle $\theta$, the coordinate converter (213) generates the three-phase voltage command values $v_u^*$, $v_v^*$, and $v_w^*$.

In this embodiment, the position sensor (215) is not necessarily provided. It is also possible to employ a so-called sensorless type in which the rotational angle $\theta_m$ is obtained from the alternating currents Iu and Iv and the application voltage Vs.

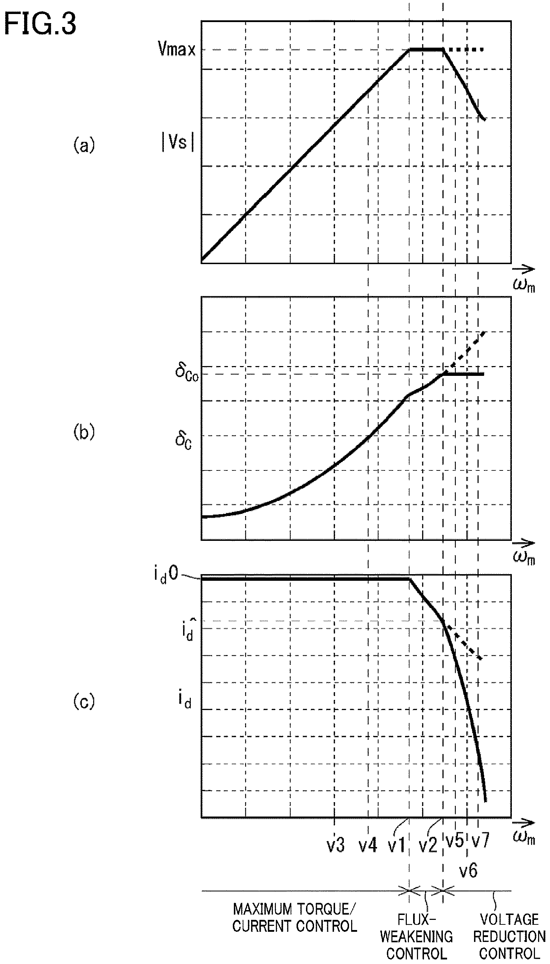

Fig. 3 is graphs illustrating relationships between control employed in this embodiment and the rotational speed $\omega_m$ as solid lines. Each of (a), (b), and (c) in Fig. 3 employs the rotational speed $\omega_m$ on the horizontal axis, and the torque command $\tau^*$ is fixed to a certain value.

(a), (b), and (c) in Fig. 3 employ an amplitude |Vs| of the application voltage Vs on the vertical axis, an axial deviation $\delta_C$, and the d-axis current $i_d$ on the vertical axis, respectively. Herein, the axial deviation $\delta_C$ is an axial deviation at a position C (Fig. 1) on an end portion of the shaft (10) on the balance weight (13c) side in the axial direction.

When the rotational speed $\omega_m$ is lower than or equal to a rotational speed v1 (also simply referred to as "speed v1": the same applies to other rotational speeds), as the rotational speed $\omega_m$ is higher, the amplitude |Vs| is larger. For example, as such control, maximum torque/current control or maximum efficiency control can be employed. Fig. 3 illustrates an example of a case in which the maximum torque/current control is performed when the rotational speed $\omega_m$ is lower than or equal to the speed v1. In addition, the amplitude |Vs| when the rotational speed $\omega_m$ is at the speed v1 is illustrated as a voltage value Vmax.

When the rotational speed $\omega_m$ is higher than or equal to a speed v2, the amplitude |Vs| is less than the voltage value Vmax. The speed v2 is higher than or equal to the speed v1. Such control is provisionally called "voltage reduction control" for convenience in this embodiment. As its example, (a) in Fig. 3 illustrates a case in which v2 > v1 and the amplitude |Vs| is smaller as the rotational speed $\omega_m$ is higher.

When the rotational speed $\omega_m$ is higher than the speed v1 and lower than or equal to the speed v2, the amplitude |Vs| is equal to the amplitude |Vs| (= Vmax) at the speed v1 regardless of the rotational speed $\omega_m$. At this time, so-called flux-weakening control is performed on the electric motor (1). When v1 = v2, a phenomenon in which the rotational speed $\omega_m$ is higher than the speed v1 and lower than or equal to the speed v2 does not occur, and the flux-weakening control is not performed.

For dependency of the application voltage Vs on the rotational speed $\omega_m$, the controller (209) causes the output circuit (210) to output the application voltage Vs. Specifically, the controller (209) generates the voltage command values $v_u^*$, $v_v^*$, and $v_w^*$ by which the output circuit (210) outputs the application voltage Vs in accordance with the rotational speed $\omega_m$, and outputs these to the output circuit (210).

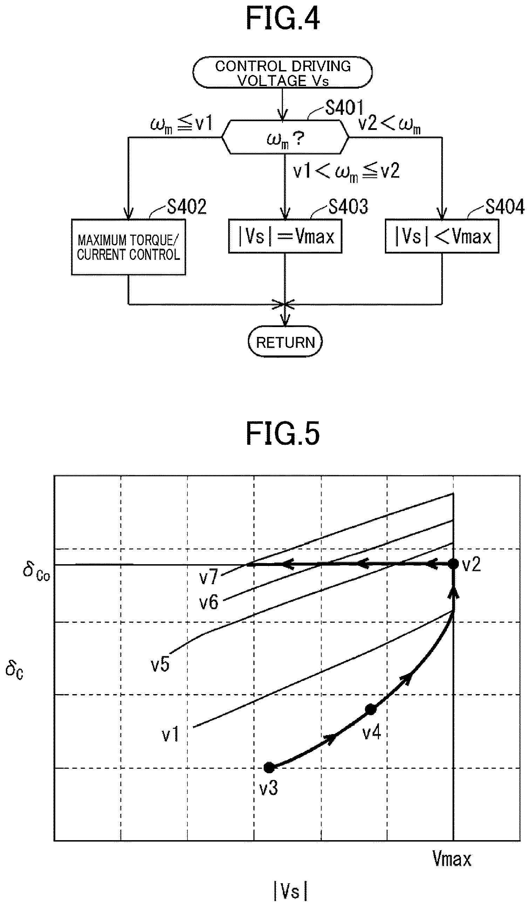

Fig. 4 is a flowchart illustrating control of the output circuit (210) by the controller (209). This flowchart is a routine for controlling the application voltage Vs. This routine is, for example, interrupt processing for a main routine that is not illustrated, which starts by interrupt processing and returns to the main routine upon ending of the routine. The routine is, for example, performed together with the main routine by the controller (209) .

In step S401, the rotational speed $\omega_m$, the speed v1, and the speed v2 are compared. If it is determined in step S401 that $\omega_m \leq$ v1, the process proceeds to step S402. If it is determined in step S401 that v1 < $\omega_m \leq$ v2, the process proceeds to step S403. If it is determined in step S401 that v2 < $\omega_m$, the process proceeds to step S404.

In step S402, the maximum torque/current control is performed. Alternatively, instead of the maximum torque/current control, in step S402, the maximum efficiency control may be performed. Alternatively, in step S402, the maximum torque/current control and the maximum efficiency control may be performed by being switched therebetween.

In step S403, the voltage value Vmax is employed as the amplitude |Vs|, and, for example, the flux-weakening control is performed. In step S404, the voltage reduction control is performed, and a value less than the voltage value Vmax is employed as the amplitude |Vs|.

In Fig. 3, for comparison with this embodiment, the broken line represents a case in which the flux-weakening control is maintained without employing the "voltage reduction control" even if the rotational speed $\omega_m$ is higher than the speed v2. In any case in which any of the maximum torque/current control, the maximum efficiency control, and the flux-weakening control is employed, as the rotational speed $\omega_m$ is higher, the axial deviation $\delta_C$ is larger.

Fig. 3 illustrates an upper limit value $\delta_{Co}$ of the axial deviation $\delta_C$. The speed v2 at which the axial deviation $\delta_C$ becomes the upper limit $\delta_{Co}$ by the maximum torque/current control, the maximum efficiency control, or the flux-weakening control is actually measured or calculated in advance. Herein, an example of a case is illustrated in which the rotational speed $\omega_m$ is increased to exceed the speed v1, and even if the control is switched from the maximum torque/current control to the flux-weakening control, the axial deviation $\delta_C$ is less than the upper limit value $\delta_{Co}$ when the rotational speed $\omega_m$ is lower than or equal to the speed v2. That is, an example of a case is illustrated in which, when the rotational speed $\omega_m$ is lower than or equal to the speed v2, even if the amplitude |Vs| is maintained at the voltage value Vmax, the axial deviation $\delta_C$ is less than the upper limit value $\delta_{Co}$.

When the rotational speed $\omega_m$ exceeds the speed v2, the amplitude |Vs| becomes a value less than the voltage value Vmax. Thus, even if the rotational speed $\omega_m$ is high, the axial deviation $\delta_C$ can be suppressed to be less than or equal to the upper limit value $\delta_{Co}$.

For example, the voltage value Vmax is the maximum value of an alternating-current voltage into which the PWM inverter (210b) can convert the direct-current voltage Vdc. Since the maximum torque/current control is employed herein, the speed v1 at which the amplitude |Vs| becomes the voltage value Vmax corresponds with a base speed. The base speed herein is the maximum value of the rotational speed of the electric motor (1) at which the electric motor (1) can generate the torque $\tau$ by the maximum torque/current control. In a case in which the maximum efficiency control is employed, the speed v1 is higher than the base speed.

Fig. 5 is a graph illustrating a relationship between the axial deviation $\delta_C$ and the amplitude |Vs| in which the rotational speed $\omega_m$ is a parameter. Figs. 3 and 5 illustrate cases in which the same torque command value $\tau^*$ is used. Hereinafter, reasons why the axial deviation $\delta_C$ can be suppressed to be less than or equal to the upper limit value $\delta_{Co}$ by the voltage reduction control will be described with reference to Fig. 5.

Fig. 5 illustrates a relationship between the axial deviation $\delta_C$ and the amplitude |Vs| when the rotational speed $\omega_m$ becomes a speed v1, v5, v6, or v7 (where v1 < v2 < v5 < v6 < v7). When the torque $\tau$ is maintained, as the amplitude |Vs| for achieving the rotational speed $\omega_m$ is larger, the axial deviation $\delta_C$ is larger. As the rotational speed $\omega_m$ is higher, the axial deviation $\delta_C$ is larger.

In Fig. 5, when the rotational speed $\omega_m$ becomes a speed v3, v4, or v2 (where v3 < v4 < v1 < v2), the value of the axial deviation $\delta_C$ with the amplitude |Vs| employed during the maximum torque/current control and the flux-weakening control is additionally plotted. The thick line in Fig. 5 indicates that, in the direction of arrowheads attached thereto, the amplitude |Vs| employed in this embodiment changes in accordance with increase in the rotational speed $\omega_m$.

In accordance with increase in the rotational speed $\omega_m$ to the speeds v3, v4, and v1, the amplitude |Vs| and the axial deviation $\delta_C$ increase. When the rotational speed $\omega_m$ reaches the speed v1, the amplitude |Vs| reaches the voltage value Vmax. Thus, even if the rotational speed $\omega_m$ is more increased, the amplitude |Vs| is no more increased.

Until the rotational speed $\omega_m$ reaches the speed v2, the amplitude |Vs| is maintained at the voltage value Vmax (the thick-line arrow in Fig. 5 directs upward from bottom in parallel to the vertical axis). At this time, the flux-weakening control is performed, and the axial deviation $\delta_C$ increases.

When the rotational speed $\omega_m$ reaches the speed v2, the axial deviation $\delta_C$ reaches the upper limit value $\delta_{Co}$, and when the rotational speed $\omega_m$ exceeds the speed v2, the voltage reduction control is performed. Thus, even if the rotational speed $\omega_m$ is high, the axial deviation $\delta_C$ is maintained at the upper limit value $\delta_{Co}$.

It is needless to say that the axial deviation $\delta_C$ is not necessarily maintained at the upper limit value $\delta_{Co}$ even if the amplitude |Vs| is decreased. However, if the amplitude |Vs| is decreased to be less than the voltage value Vmax, the axial deviation $\delta_C$ is more reduced than that in a case in which the amplitude |Vs| is maintained at the voltage value Vmax. As for (b) in Fig. 3, when the voltage reduction control is employed, the solid-line curve is always below the broken-line curve. In other words, the radial stress at a specific rotational angle when the electric motor (1) is rotating is reduced. This contributes to reduction of the uneven contact of the shaft (10) to the bearing (14).

As described above, the axial deviation $\delta_C$ may become less than the upper limit value $\delta_{Co}$ by decrease in the amplitude |Vs|. For example, the amplitude |Vs| in the voltage reduction control can be a fixed value that is lower than the voltage value represented by the solid line in (a) in Fig. 3.

In (c) in Fig. 3, also in the voltage reduction control as in the flux-weakening control, the d-axis current $i_d$ decreases (since the d-axis current $i_d$ is a negative value, the absolute value thereof increases). Note that the inclination of decrease in the d-axis current $i_d$ with respect to increase in the rotational speed $\omega_m$ is more obvious in the voltage reduction control than in the flux-weakening control.

Note that in the voltage reduction control, unlike in the simple flux-weakening control, the amplitude |Vs| becomes a value lower than the maximum thereof.

Hereinafter, the d-axis current $i_d$ for making the axial deviation $\delta_C$ less than or equal to the upper limit value $\delta_{Co}$ will be described by using expressions.

[Table 1]

| Name | Symbol |
|---|---|
| d-axis permeance coefficient | $P_{d0}, P_{d1}$ |
| q-axis permeance coefficient | $P_{q0}, P_{q1}$ |
| d-axis gap permeance per unit area | $p_{gd} = P_{d0} + 2P_{d1}\cos(2P_n\theta_{rm})$ |
| q-axis gap permeance per unit area | $p_{gq} = P_{q0} + 2P_{q1}\cos(2P_n\theta_{rm})$ |
| permanent magnet magnetomotive force constant | $F_M$ |
| armature current magnetomotive force constant | $F_D$ |
| permanent magnet magnetomotive force | $f_M = F_M\cos(P_n\theta_{rm})$ |
| armature current magnetomotive force | $f_D = F_D(i_d\cos[P_n\theta_{rm}] + i_q\sin[P_n\theta_{rm}])$ |
| number of pole pairs | $P_n$ |
| arbitrary phase on rotor (based on d-axis, mechanical angle) | $\theta_{rm}$ |
| d-axis current | $i_d$ |
| q-axis current | $i_q$ |
| air permeability | $\mu_0$ |
| offset amount of shaft 10 | $x$ |
| average gap length between stator 11 and rotor 12 | $g$ |
| unbalanced magnetic pull | $F_B$ |
| centrifugal forces acting on balance weights 13a and 13c | $F_A, F_C$ |
| axial deflection (axial stress) at point C | $\delta_C$ |
| axial stress predetermined value | $\delta_{Co}$ |
| constant determined by material physical property and shape of shaft | $k_A, k_B, k_C$ |
| mass of balance weights 13a and 13c | $m_A, m_C$ |
| center of gravity (rotation center basis) of balance weights 13a and 13c | $r_A, r_C$ |
| mechanical angular speed | $\omega_m$ |

The axial deviation $\delta_C$ can be expressed as Expression (1) based on an elasticity equation of beam deflection.
[Math. 1]

$$\delta_C = k_A F_A + k_B F_B + k_C F_C \cdots (1)$$

As an armature winding included in the armature of the electric motor (1), a case in which a plurality of coils are connected in series for each phase is employed as an example. In this case, the unbalanced magnetic pull $F_B$ is expressed as Expression (2).

[Math. 2]

$$F_B = \frac{x}{g} \cdot \frac{\pi}{2\mu_0} \cdot \left\{ \begin{array}{l} \left(F_D i_d + F_M\right)^2 \left[\left(P_{d0} + P_{d1}\right)^2 + P_{d1}^2\right] \\ + \left(F_D i_q\right)^2 \left[\left(P_{q0} - P_{q1}\right)^2 + P_{q1}^2\right] \end{array} \right\}$$

$$= a i_d^2 + b i_d + c \cdots (2)$$

where

$$\left\{ \begin{array}{l} a = \dfrac{x}{g} \cdot \dfrac{\pi}{2\mu_0} \cdot \left(F_D^2\right)\left[\left(P_{d0} + P_{d1}\right)^2 + P_{d1}^2\right] \\[4mm] b = \dfrac{x}{g} \cdot \dfrac{\pi}{2\mu_0} \cdot \left(2 F_D F_M\right)\left[\left(P_{d0} + P_{d1}\right)^2 + P_{d1}^2\right] \\[4mm] c = \dfrac{x}{g} \cdot \dfrac{\pi}{2\mu_0} \cdot \left\{ \begin{array}{l} + \left(F_M^2\right)\left[\left(P_{d0} + P_{d1}\right)^2 + P_{d1}^2\right] \\ + \left(F_D i_q\right)^2 \left[\left(P_{q0} - P_{q1}\right)^2 + P_{q1}^2\right] \end{array} \right\} \end{array} \right.$$

The centrifugal forces $F_A$ and $F_C$ are expressed as Expression (3), and Expression (4) is derived from Expressions (1), (2), and (3).

[Math. 3]

$$F_A = m_A r_A \omega_m^2 \quad, \quad F_C = m_C r_C \omega_m^2 \quad \cdots (3)$$

[Math. 4]

$$\omega_m^2 = -\frac{k_B \delta_c}{k_A m_A r_A + k_C m_C r_C}\left(a i_d^2 + b i_d + c\right) \cdots (4)$$

In a case in which the q-axis current $i_q$ is fixed, not only values a and b, but also a value c is fixed. Thus, from a relationship illustrated in Expression (5) obtained by setting $\delta_C = \delta_{C0}$ in Expression (4), it is found that the square of the rotational speed $\omega_m$ is in direct proportion to a quadratic expression of the d-axis current $i_d$. That is, by determining the d-axis current $i_d$ in accordance with the rotational speed $\omega_m$ according to Expression (5), the axial deviation $\delta_C$ can be less than or equal to the upper limit value $\delta_{C0}$.

[Math. 5]

$$\omega_m^2 = -\frac{k_B \delta_{c0}}{k_A m_A r_A + k_C m_C r_C}\left(a i_d^2 + b i_d + c\right) \cdots (5)$$

As understood from Expression (5), when the d-axis current $i_d$ is larger than the value (-b/2a), as the d-axis current $i_d$ is smaller, the axial deviation $\delta_C$ is also smaller. When the d-axis current $i_d$ is smaller than the value (-b/2a), as the d-axis current $i_d$ is smaller, the axial deviation $\delta_C$ is larger. Thus, in order to reduce the axial deviation $\delta_C$ as much as possible, the d-axis current $i_d$ is desirably the value (-b/2a).

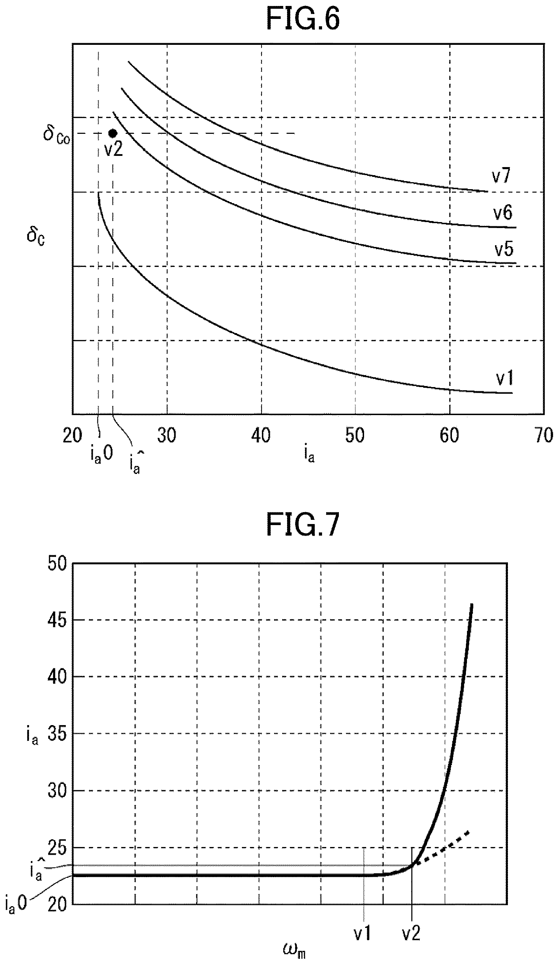

Fig. 6 is a graph illustrating a relationship between a current amplitude ia (arbitrary unit) and the axial deviation $\delta_C$ in which the rotational speed $\omega_m$ is a parameter. Note that the torque $\tau$ is fixed. Herein, ia = $[i_d^2 + i_q^2]^{1/2}$ and is the amplitude of a current vector Ia when the alternating currents Iu, Iv, and Iw are expressed as the current vector Ia.

Fig. 6 illustrates a relationship between the axial deviation $\delta_C$ and the current amplitude ia when the rotational speed $\omega_m$ becomes a speed v1, v5, v6, or v7. When the torque $\tau$ is maintained, as the current amplitude ia for achieving the rotational speed $\omega_m$ is larger, the axial deviation $\delta_C$ is smaller. As the rotational speed $\omega_m$ is higher, the axial deviation $\delta_C$ is larger.

In Fig. 6, the value of the axial deviation $\delta_C$ (this corresponds to the upper limit value $\delta_{Co}$) with the current amplitude ia employed during the flux-weakening control when the rotational speed $\omega_m$ becomes a speed v2 is additionally plotted. At this time, the amplitude |Vs| becomes the voltage value Vmax, and the current amplitude ia becomes a value ia^ obtained as described later. When the rotational speed $\omega_m$ is lower than or equal to the speed v1 during the maximum torque/current control, the current amplitude ia becomes a value ia0.

Fig. 7 is a graph illustrating a relationship between the rotational speed $\omega_m$ and the current amplitude ia (arbitrary unit: the same unit as in Fig. 6) when the torque $\tau$ is a predetermined value. The solid line illustrates a case in which $\omega_m$ > v2 and the voltage reduction control is employed, and the broken line illustrates a case in which $\omega_m$ > v2 and the flux-weakening control is employed. In the illustrated cases, the maximum torque/current control is employed when $\omega_m \leq$ v1 and the flux-weakening control is employed when v1 < $\omega_m \leq$ v2.

Thus, when the rotational speed $\omega_m$ exceeds the speed v2, the current amplitude ia becomes a value larger than the value employed during the flux-weakening (this is larger than the value ia^), so that the above-described voltage reduction control can be performed.

That is, when the rotational speed $\omega_m$ exceeds the speed v2, the controller (209) causes the output circuit (210) to output, to the electric motor (1), the alternating currents Iu, Iv, and Iw from which the current vector Ia with the current amplitude ia larger than the value of the current amplitude ia employed during the flux-weakening control (this is larger than the value ia^) is obtained.

The value of the current amplitude ia employed during the flux-weakening control can be obtained as follows. Expressions (6), (7), (8), and (9) are satisfied by adopting a rotational speed $\omega$ as an electric angle, the torque $\tau$ (this may be substituted by the torque command value $\tau^*$), d-axis inductance Ld and q-axis inductance Lq of the electric motor (1), a field magnetic flux $\Psi_a$ generated by a permanent magnet of the field element included in the electric motor (1), an electric resistance Ra of the electric motor (1), the d-axis voltage $v_d$ and the q-axis voltage $v_q$ (these may be substituted by the respective command value $v_d^*$ and $v_q^*$), and a differential operator p.

[Math. 6]

$$V\max = \sqrt{v_d^2 + v_q^2} \cdots (6)$$

[Math. 7]

$$\begin{pmatrix} v_d \\ v_q \end{pmatrix} = \begin{pmatrix} R_a + pL_d & -\omega L_q \\ \omega L_d & R_a + pL_q \end{pmatrix}\begin{pmatrix} i_d \\ i_q \end{pmatrix} + \begin{pmatrix} 0 \\ \omega\Psi_a \end{pmatrix}\cdots(7)$$

[Math. 8]

$$\tau = P_n\Psi_a i_q + P_n(L_d - L_q)i_d i_q \cdots(8)$$

[Math. 9]

$$ia = \sqrt{i_d^2 + i_q^2}\cdots(9)$$

The rotational speed $\omega$ is obtained by the product of the rotational speed $\omega_m$ and the number of pole pairs $P_n$. Thus, the current amplitude ia obtained from simultaneous equations of Expressions (6), (7), (8), and (9) where $\omega = P_n \cdot \omega_m$ is the value of the current amplitude ia employed during the flux-weakening control. The current amplitude ia obtained from simultaneous equations of Expressions (6), (7), (8), and (9) in which the left side of Expression (6) is $\omega = P_n \cdot v1$ is the value ia0.

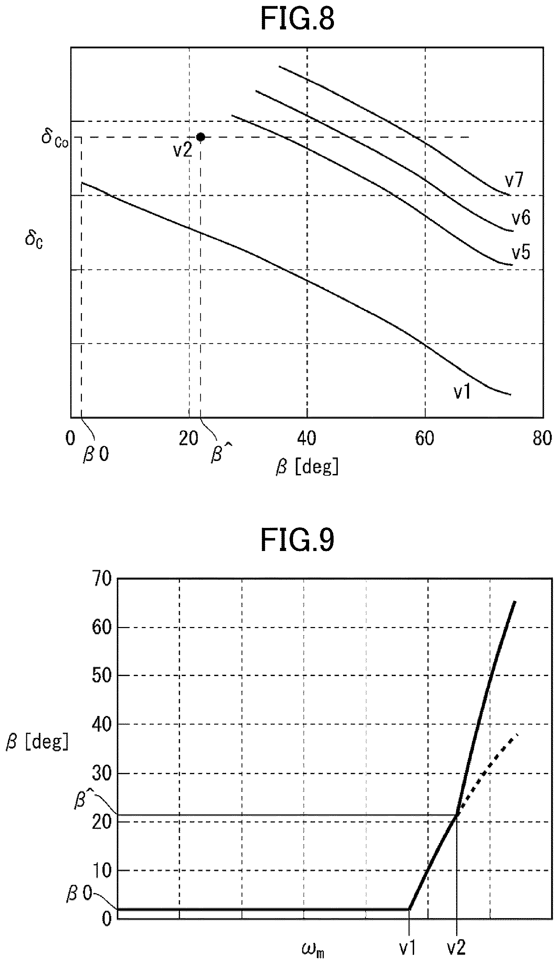

Fig. 8 is a graph illustrating a relationship between a phase $\beta$ of the current vector Ia with respect to the q-axis and the axial deviation $\delta_C$ in which the rotational speed $\omega_m$ is a parameter. Note that the torque $\tau$ is fixed. There is a relationship of Expression (10).

[Math. 10]

$$ \beta = \tan^{-1}\left( -\frac{i_d}{i_q} \right) \cdots (10) $$

Fig. 8 illustrates a relationship between the axial deviation $\delta_C$ and the phase $\beta$ when the rotational speed $\omega_m$ becomes a speed v1, v5, v6, or v7. When the torque $\tau$ is maintained, as the phase $\beta$ for achieving the rotational speed $\omega_m$ is larger, the axial deviation $\delta_C$ is smaller. As the rotational speed $\omega_m$ is higher, the axial deviation $\delta_C$ is larger.

In Fig. 8, the value of the axial deviation $\delta_C$ (this corresponds to the upper limit value $\delta_{Co}$) with the phase $\beta$ employed during the flux-weakening control when the rotational speed $\omega_m$ becomes a speed v2 is additionally plotted. At this time, the amplitude |Vs| becomes the voltage value Vmax, and the phase $\beta$ becomes a value $\beta^\wedge$ obtained as described later. When the rotational speed $\omega_m$ is lower than or equal to the speed v1 during the maximum torque/current control, the phase $\beta$ becomes a value $\beta0$.

Fig. 9 is a graph illustrating a relationship between the rotational speed $\omega_m$ and the phase $\beta$ when the torque $\tau$ is a predetermined value. The solid line illustrates a case in which $\omega_m > v2$ and the voltage reduction control is employed, and the broken line illustrates a case in which $\omega_m > v2$ and the flux-weakening control is employed. In the illustrated cases, the maximum torque/current control is employed when $\omega_m \leq v1$ and the flux-weakening control is employed when $v1 < \omega_m \leq v2$.

Thus, when the rotational speed $\omega_m$ exceeds the speed v2, the phase $\beta$ becomes a value larger than the value employed during the flux-weakening (this is larger than the value $\beta^\wedge$), so that the above-described voltage reduction control can be performed.

That is, when the rotational speed $\omega_m$ exceeds the speed v2, the controller (209) causes the output circuit (210) to output, to the electric motor (1), the alternating currents Iu, Iv, and Iw with which the phase $\beta$ larger than the value of the phase $\beta$ employed during the flux-weakening control is obtained.

The phase $\beta$ obtained from simultaneous equations of Expressions (6), (7), (8), and (10) where $\omega = P_n \cdot \omega_m$ is the value of the phase $\beta$ employed during the flux-weakening control. The phase $\beta$ obtained from simultaneous equations of Expressions (6), (7), (8), and (10) in which the left side of Expression (6) is $\omega = P_n \cdot v1$ is the value $\beta0$.

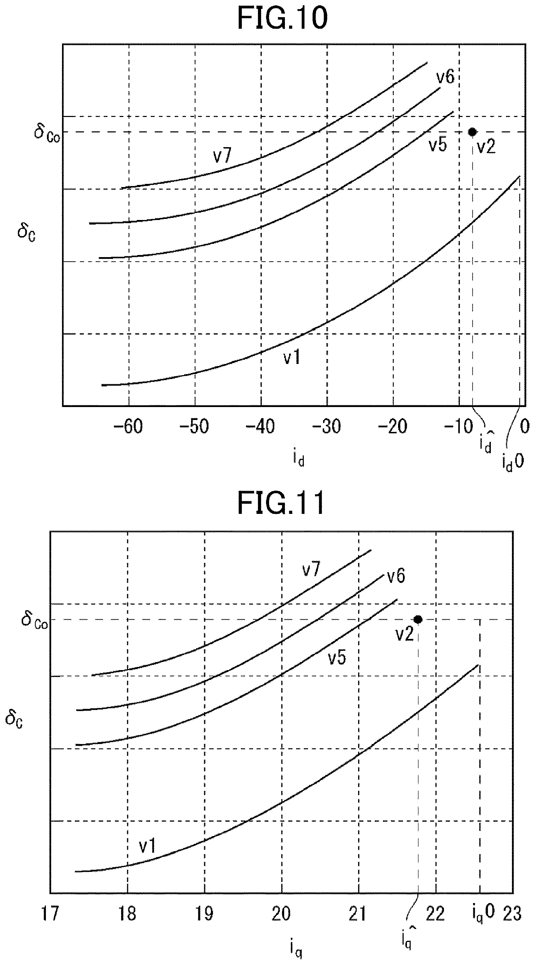

Fig. 10 is a graph illustrating a relationship between the d-axis current $i_d$ (< 0; arbitrary unit) and the axial deviation $\delta_C$ in which the rotational speed $\omega_m$ is a parameter.

Fig. 10 illustrates a relationship between the axial deviation $\delta_C$ and the d-axis current $i_d$ when the rotational speed $\omega_m$ becomes a speed v1, v5, v6, or v7. Note that the torque $\tau$ is fixed. When the torque $\tau$ is maintained, as the d-axis current $i_d$ for achieving the rotational speed $\omega_m$ is larger (the absolute value is smaller), the axial deviation $\delta_C$ is larger. As the rotational speed $\omega_m$ is higher, the axial deviation $\delta_C$ is larger.

In Fig. 10, the value of the axial deviation $\delta_C$ (this corresponds to the upper limit value $\delta_{Co}$) with the d-axis current $i_d$ employed during the flux-weakening control when the rotational speed $\omega_m$ becomes a speed v2 is additionally plotted. At this time, the amplitude |Vs| becomes the voltage value Vmax, and the d-axis current $i_d$ becomes a value $i_d^\wedge$ obtained as described later. When the rotational speed $\omega_m$ is lower than or equal to the speed v1 during the maximum torque/current control, the d-axis current $i_d$ becomes a value $i_d0$ (also refer to (c) in Fig. 3).

Thus, when the rotational speed $\omega_m$ exceeds the speed v2, the d-axis current $i_d$ becomes a value smaller (the absolute value is larger) than a value employed during the flux-weakening control (this is smaller than the value $i_d^\wedge$), so that the above-described voltage reduction control can be performed.

That is, when the rotational speed $\omega_m$ exceeds the speed v2, the controller (209) causes the output circuit (210) to output, to the electric motor (1), the alternating currents Iu, Iv, and Iw having a d-axis component the value of which is smaller than the value of the d-axis current $i_d$ employed during the flux-weakening control.

Fig. 11 is a graph illustrating a relationship between the q-axis current $i_q$ (arbitrary unit) and the axial deviation $\delta_C$ in which the rotational speed $\omega_m$ is a parameter. Note that the torque $\tau$ is fixed.

Fig. 11 illustrates a relationship with the axial deviation $\delta_C$ when the rotational speed $\omega_m$ becomes a speed v1, v5, v6, or v7. When the torque $\tau$ is maintained, as the q-axis current $i_q$ for achieving the rotational speed $\omega_m$ is larger, the axial deviation $\delta_C$ is larger. As the rotational speed $\omega_m$ is higher, the axial deviation $\delta_C$ is larger.

In Fig. 11, the value of the axial deviation $\delta_C$ (this corresponds to the upper limit value $\delta_{Co}$) with the q-axis current iq employed during the flux-weakening control when the rotational speed $\omega_m$ becomes a speed v2 is additionally plotted. At this time, the amplitude |Vs| becomes the voltage value Vmax, and the q-axis current $i_q$ becomes a value $i_q{}^{\wedge}$ obtained as described later. When the rotational speed $\omega_m$ is lower than or equal to the speed v1 during the maximum torque/current control, the q-axis current $i_q$ becomes a value $i_q0$.

Thus, when the rotational speed $\omega_m$ exceeds the speed v2, the q-axis current $i_q$ becomes a value smaller than the value employed during the flux-weakening (this is smaller than the value $i_q{}^{\wedge}$), so that the above-described voltage reduction control can be performed.

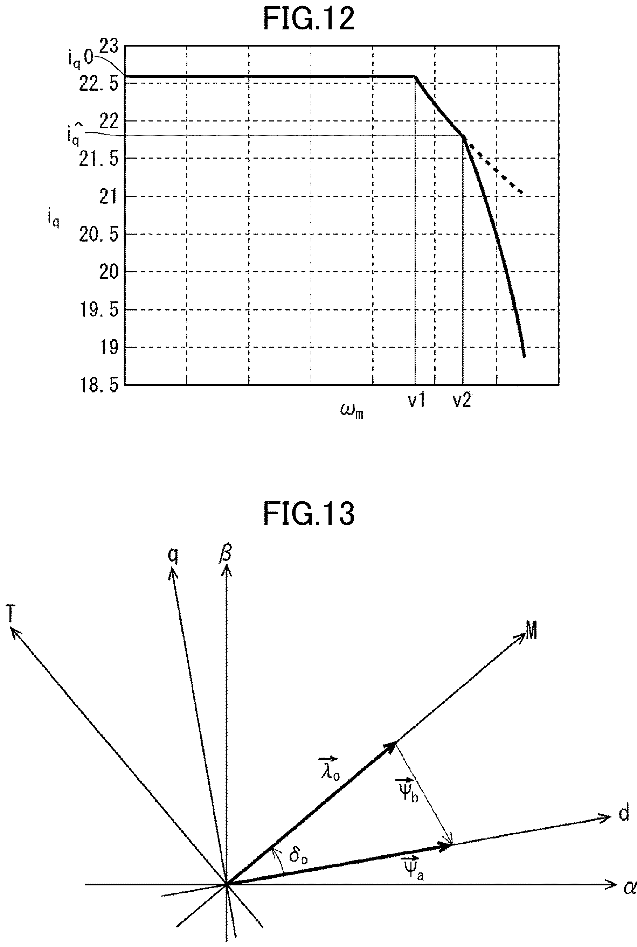

Fig. 12 is a graph illustrating a relationship between the rotational speed $\omega_m$ and the q-axis current $i_q$ (arbitrary unit: the same unit as in Fig. 11) when the torque $\tau$ is a predetermined value. The solid line illustrates a case in which $\omega_m$ > v2 and the voltage reduction control is employed, and the broken line illustrates a case in which $\omega_m$ > v2 and the flux-weakening control is employed. In the illustrated cases, the maximum torque/current control is employed when $\omega_m$ $\leq$ v1 and the flux-weakening control is employed when v1 < $\omega_m$ $\leq$ v2.

That is, when the rotational speed $\omega_m$ exceeds the speed v2, the controller (209) causes the output circuit (210) to output, to the electric motor (1), the alternating currents Iu, Iv, and Iw having a q-axis component the value of which is smaller than the value of the q-axis current $i_q$ employed during the flux-weakening control.

The d-axis current $i_d$ and the q-axis current $i_q$ obtained from simultaneous equations of Expressions (6), (7), and (8) where $\omega = P_n \cdot \omega_m$ are a d-axis current and a q-axis current, respectively, employed during the flux-weakening control. The d-axis current $i_d$ and the q-axis current $i_q$ obtained from simultaneous equations of Expressions (6), (7), and (8) in which the left side of Expression (6) is $\omega = P_n \cdot v1$ is the values $i_d0$ and $i_q0$.

Fig. 13 is a vector diagram illustrating a relationship between a field magnetic flux vector $\Psi_a$, a magnetic flux vector $\Psi_b$ attributed to an armature reaction, and a primary magnetic flux vector $\lambda_0$. In Fig. 13, in order to explicitly indicate that these magnetic flux vectors $\Psi_a$, $\Psi_b$, and $\lambda_0$ are vectors, arrows are shown for the respective symbols. Note that, by using the same symbols, amplitudes of these vectors are also referred to as field magnetic flux $\Psi_a$, magnetic flux $\Psi_b$, and primary magnetic flux $\lambda_0$ in the description of this embodiment.

The primary magnetic flux vector $\lambda_0$ is a composite of a magnetic flux vector ($-\Psi_b$) and the field magnetic flux vector $\Psi_a$. A load angle $\delta_0$ is a phase of the primary magnetic flux vector $\lambda_0$ with respect to the field magnetic flux vector $\Psi_a$. The primary magnetic flux $\lambda_0$ is represented as Expression (11). There is a relationship of Expression (12) between the primary magnetic flux $\lambda_0$ and the load angle $\delta_0$.

[Math. 11]

$$\lambda_o = \sqrt{\left(\Psi_a + L_d i_d\right)^2 + \left(L_q i_q\right)^2} \quad \cdots (11)$$

[Math. 12]

$$\begin{cases} \lambda_o \cos \delta_o = L_d i_d + \Psi_a \\ \lambda_o \sin \delta_o = L_q i_q \end{cases} \quad \cdots (12)$$

An $\alpha$ axis and a $\beta$ axis are coordinate axes of a fixed coordinate system in the electric motor (1). The d-axis and the q-axis are coordinate axes of a rotary coordinate system, meaning of each of which is described above. The field magnetic flux vector $\Psi_a$ and the d-axis have the same phase and the same direction in a vector diagram. An M-axis and a T-axis indicate coordinate axes that advance in the same phase as the primary magnetic flux vector $\lambda_0$ and 90 degrees with respect to this, respectively. The primary magnetic flux vector $\lambda_0$ and the M-axis have the same direction in a vector diagram. Hereinafter, an M-axis component and a T-axis component of the three-phase alternating currents Iu, Iv, and Iw output to the electric motor (1) are also referred to as M-axis current $i_M$ and T-axis current $i_T$. The T-axis current $i_T$ is represented as Expression (13).

[Math. 13]

$$i_T = -i_d \sin \delta_o + i_q \cos \delta_o \cdots (13)$$

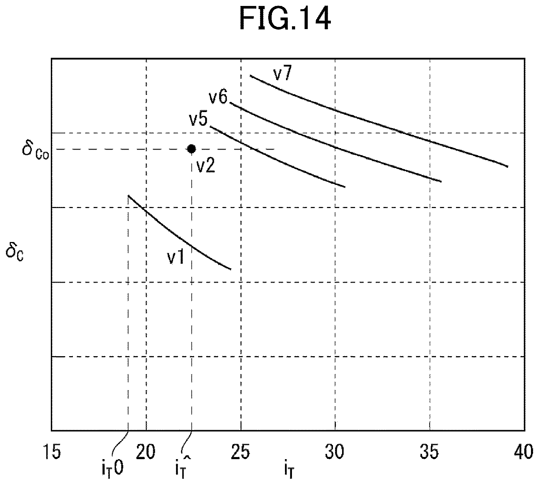

Fig. 14 is a graph illustrating a relationship between the T-axis current $i_T$ (arbitrary unit) and the axial deviation $\delta_C$ in which the rotational speed $\omega_m$ is a parameter. Note that the torque $\tau$ is fixed.

Fig. 14 illustrates a relationship between the axial deviation $\delta_C$ and the T-axis current $i_T$ when the rotational speed $\omega_m$ becomes a speed v1, v5, v6, or v7. When the torque $\tau$ is maintained, as the T-axis current $i_T$ for achieving the rotational speed $\omega_m$ is larger, the axial deviation $\delta_C$ is smaller. As the rotational speed $\omega_m$ is higher, the axial deviation $\delta_C$ is larger.

In Fig. 14, the value of the axial deviation $\delta_C$ (this corresponds to the upper limit value $\delta_{Co}$) with the T-axis current $i_T$ employed during the flux-weakening control when the rotational speed $\omega_m$ becomes a speed v2 is additionally plotted. At this time, the amplitude $|Vs|$ becomes the voltage value Vmax, and the T-axis current $i_T$ becomes a value $i_T\hat{}$ obtained as described later. When the rotational speed $\omega_m$ is lower than or equal to the speed v1 during the maximum torque/current control, the T-axis current $i_T$ becomes a value $i_T0$.

Thus, when the rotational speed $\omega_m$ exceeds the speed v2, the T-axis current $i_T$ becomes a value larger than the value employed during the flux-weakening (this is larger than the value $i_T\hat{}$), so that the above-described voltage reduction control can be performed.

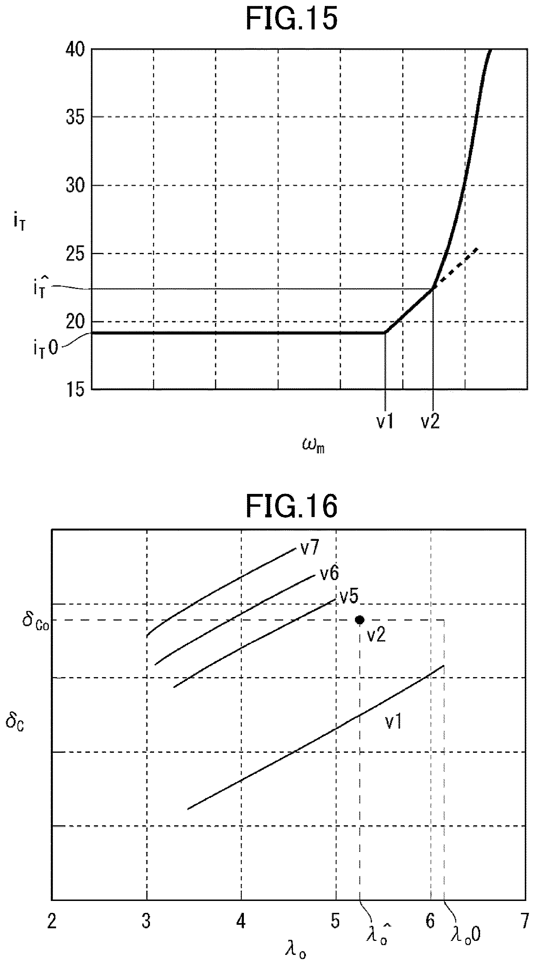

Fig. 15 is a graph illustrating a relationship between the rotational speed $\omega_m$ and the T-axis current $i_T$ (arbitrary unit: the same unit as in Fig. 14) when the torque $\tau$ is a predetermined value. The solid line illustrates a case in which $\omega_m > v2$ and the voltage reduction control is employed, and the broken line illustrates a case in which $\omega_m > v2$ and the flux-weakening control is employed. In the illustrated cases, the maximum torque/current control is employed when $\omega_m \leq v1$ and the flux-weakening control is employed when $v1 < \omega_m \leq v2$.

That is, when the rotational speed $\omega_m$ exceeds the speed v2, the controller (209) causes the output circuit (210) to output, to the electric motor (1), the alternating currents Iu, Iv, and Iw having a T-axis component the value of which is larger than the value of the T-axis component (T-axis current $i_T$) of the alternating currents Iu, Iv, and Iw output to the electric motor (1) in a case in which the flux-weakening control is performed at the speed.

The T-axis current $i_T$ obtained from simultaneous equations of Expressions (6), (7), (8), (12), and (13) where $\omega = P_n \cdot \omega_m$ is the value of the T-axis current $i_T$ in a case in which the flux-weakening control is performed. The T-axis current $i_T$ obtained from simultaneous equations of Expressions (6), (7), (8), (12), and (13) in which the left side of Expression (6) is $\omega = P_n \cdot v1$ is the value $i_T0$.

Fig. 16 is a graph illustrating a relationship between the primary magnetic flux $\lambda_0$ (arbitrary unit) and the axial deviation $\delta_C$ in which the rotational speed $\omega_m$ is a parameter. Note that the torque $\tau$ is fixed.

Fig. 16 illustrates a relationship between the axial deviation $\delta_C$ and the primary magnetic flux $\lambda_0$ when the rotational speed $\omega_m$ becomes a speed v1, v5, v6, or v7. When the torque $\tau$ is maintained, as the primary magnetic flux $\lambda_0$ for achieving the rotational speed $\omega_m$ is larger, the axial deviation $\delta_C$ is larger. As the rotational speed $\omega_m$ is higher, the axial deviation $\delta_C$ is larger.

In Fig. 16, the value of the axial deviation $\delta_C$ (this corresponds to the upper limit value $\delta_{Co}$) with the primary magnetic flux $\lambda_0$ employed during the flux-weakening control when the rotational speed $\omega_m$ becomes a speed v2 is additionally plotted. At this time, the amplitude $|Vs|$ becomes the voltage value Vmax, and the primary magnetic flux $\lambda_0$ becomes a value $\lambda_0\hat{}$ obtained as described later. When the rotational speed $\omega_m$ is lower than or equal to the speed v1 during the maximum torque/current control, the primary magnetic flux $\lambda_0$ becomes a value $\lambda_0 0$.

Thus, when the rotational speed $\omega_m$ exceeds the speed v2, the primary magnetic flux $\lambda_0$ having a value smaller than the value of the primary magnetic flux in a case in which the flux-weakening control is performed is generated, so that the above-described voltage reduction control can be performed.

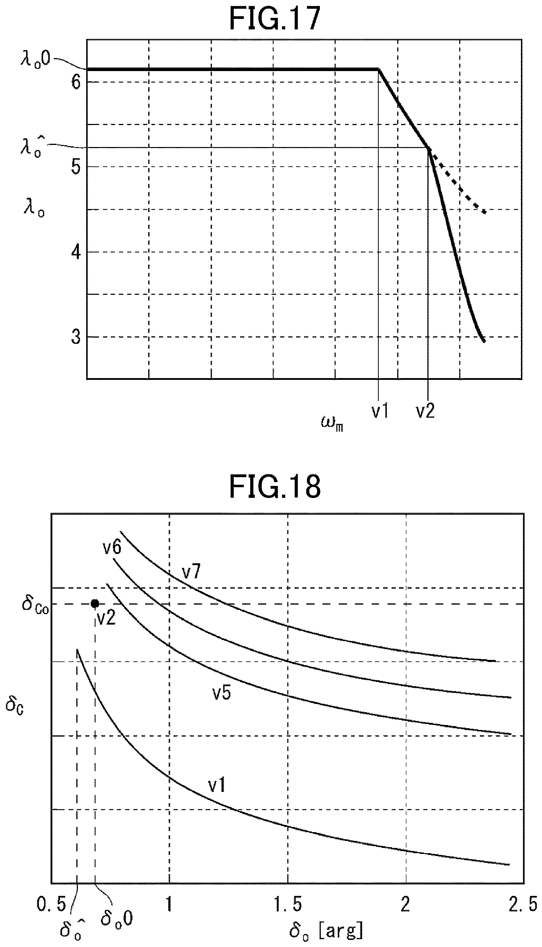

Fig. 17 is a graph illustrating a relationship between the rotational speed $\omega_m$ and the primary magnetic flux $\lambda_0$ (arbitrary unit: the same unit as in Fig. 16) when the torque $\tau$ is a predetermined value. The solid line illustrates a case in which $\omega_m > v2$ and the voltage reduction control is employed, and the broken line illustrates a case in which $\omega_m > v2$ and the flux-weakening control is employed. In the illustrated cases, the maximum torque/current control is employed when $\omega_m \leq v1$ and the flux-weakening control is employed when $v1 < \omega_m \leq v2$.

That is, when the rotational speed $\omega_m$ exceeds the speed v2, the controller (209) causes the output circuit (210) to output, to the electric motor (1), the alternating currents Iu, Iv, and Iw that causes the electric motor (1) to generate the primary magnetic flux $\lambda_0$ smaller than the value of the primary magnetic flux in a case in which the flux-weakening control is performed.

The primary magnetic flux $\lambda_0$ obtained from simultaneous equations of Expressions (6), (7), (8), and (11) where $\omega = P_n \cdot \omega_m$ is the value of the primary magnetic flux $\lambda_0$ in a case in which the flux-weakening control is performed. The primary magnetic flux $\lambda_0$ obtained from simultaneous equations of Expressions (6), (7), (8), and (11) in which the left side of Expression (6) is $\omega = P_n \cdot v1$ is the value $\lambda_0 0$.

Fig. 18 is a graph illustrating a relationship between the load angle $\delta_0$ and the axial deviation $\delta_C$ in which the rotational speed $\omega_m$ is a parameter. Note that the torque is fixed.

Fig. 18 illustrates a relationship between the axial deviation $\delta_C$ and the load angle $\delta_0$ when the rotational speed $\omega_m$ becomes a speed v1, v5, v6, or v7. When the torque $\tau$ is maintained, as the load angle $\delta_0$ for achieving the rotational

speed $\omega_m$ is larger, the axial deviation $\delta_C$ is smaller. As the rotational speed $\omega_m$ is higher, the axial deviation $\delta_C$ is larger.

In Fig. 18, the value of the axial deviation $\delta_C$ (this corresponds to the upper limit value $\delta_{Co}$) with the load angle $\delta_0$ employed during the flux-weakening control when the rotational speed $\omega_m$ becomes a speed v2 is additionally plotted. At this time, the amplitude |Vs| becomes the voltage value Vmax, and the load angle $\delta_0$ becomes a value $\delta_0$^ obtained as described later. When the rotational speed $\omega_m$ is lower than or equal to the speed v1 during the maximum torque/current control, the load angle $\delta_0$ becomes a value $\delta_0$0.

Thus, when the rotational speed $\omega_m$ exceeds the speed v2, the load angle $\delta_0$ becomes a value larger than the value of the load angle in a case in which the flux-weakening control is performed, so that the above-described voltage reduction control can be performed.

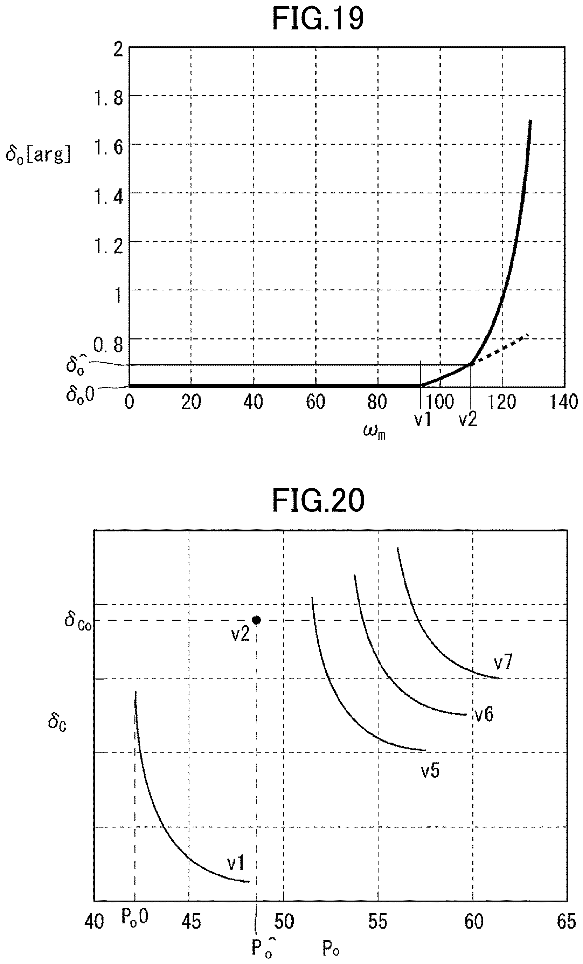

Fig. 19 is a graph illustrating a relationship between the rotational speed $\omega_m$ and the load angle $\delta_0$ when the torque $\tau$ is a predetermined value. The solid line illustrates a case in which $\omega_m$ > v2 and the voltage reduction control is employed, and the broken line illustrates a case in which $\omega_m$ > v2 and the flux-weakening control is employed. In the illustrated cases, the maximum torque/current control is employed when $\omega_m \leq$ v1 and the flux-weakening control is employed when v1 < $\omega_m \leq$ v2.

That is, when the rotational speed $\omega_m$ exceeds the speed v2, the controller (209) causes the output circuit (210) to output the alternating currents Iu, Iv, and Iw that causes the electric motor (1) to generate the load angle $\delta_0$ larger than the value of the load angle in a case in which the flux-weakening control is performed.

The load angle $\delta_0$ obtained from simultaneous equations of Expressions (6), (7), (8), and (12) where $\omega = P_n \cdot \omega_m$ is the value of the load angle $\delta_0$ in a case in which the flux-weakening control is performed. The load angle $\delta_0$ obtained from simultaneous equations of Expressions (6), (7), (8), and (12) in which the left side of Expression (6) is $\omega = P_n \cdot$v1 is the value $\delta_0$0.

Fig. 20 is a graph illustrating a relationship between an instantaneous actual electric power Po (arbitrary unit) and the axial deviation $\delta_C$ in which the rotational speed $\omega_m$ is a parameter. Note that the torque is fixed.

Fig. 20 illustrates a relationship between the axial deviation $\delta_C$ and the instantaneous actual electric power Po when the rotational speed $\omega_m$ becomes a speed v1, v5, v6, or v7. The instantaneous actual electric power Po is an instantaneous actual electric power supplied from the output circuit (210) to the electric motor (1). The instantaneous actual electric power Po may be an instantaneous actual electric power generated by the electric motor (1). Po = $v_d \cdot i_d$ + $v_q \cdot i_q$ and, for example, can be calculated by $v_d^* \cdot i_d$ + $v_q^* \cdot i_q$ by using the command values $v_d^*$ and $v_q^*$.

When the torque $\tau$ is maintained, as the instantaneous actual electric power Po for achieving the rotational speed $\omega_m$ is larger, the axial deviation $\delta_C$ is smaller. As the rotational speed $\omega_m$ is higher, the axial deviation $\delta_C$ is larger.

In Fig. 20, the value of the axial deviation $\delta_C$ (this corresponds to the upper limit value $\delta_{Co}$) with the instantaneous actual electric power Po employed during the flux-weakening control when the rotational speed $\omega_m$ becomes a speed v2 is additionally plotted. At this time, the amplitude |Vs| becomes the voltage value Vmax, and the instantaneous actual electric power Po becomes a value Po^ (= $v_d^* \cdot i_d$^ + $v_q^* \cdot i_q$^). When the rotational speed $\omega_m$ is lower than or equal to the speed v1 during the maximum torque/current control, the instantaneous actual electric power Po becomes less than or equal to a value Po0 (= $v_d^* \cdot i_d$0 + $v_q^* \cdot i_q$0).

Thus, when the rotational speed $\omega_m$ exceeds the speed v2, the instantaneous actual electric power Po becomes a value larger than the value of the instantaneous actual electric power in a case in which the flux-weakening control is performed, so that the above-described voltage reduction control can be performed.

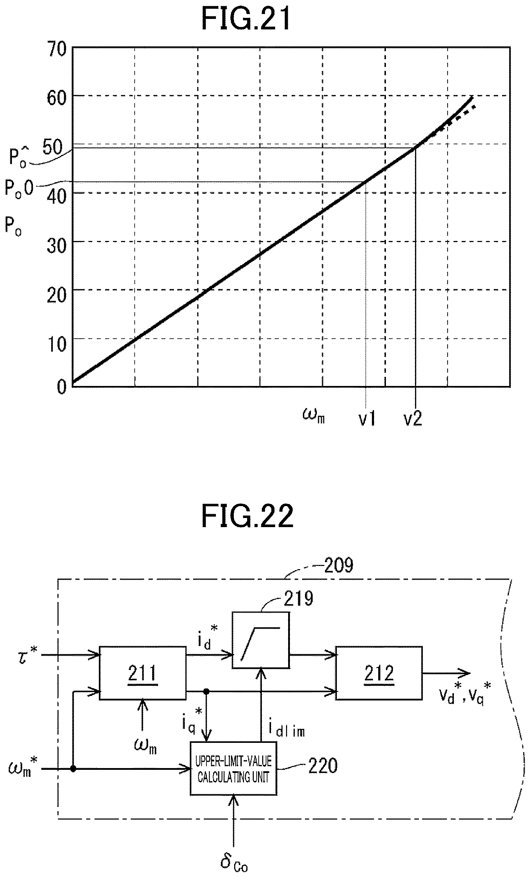

Fig. 21 is a graph illustrating a relationship between the rotational speed $\omega_m$ and the instantaneous actual electric power Po (arbitrary unit: the same unit as in Fig. 20) when the torque $\tau$ is a predetermined value. The solid line illustrates a case in which $\omega_m$ > v2 and the voltage reduction control is employed, and the broken line illustrates a case in which $\omega_m$ > v2 and the flux-weakening control is employed. In the illustrated cases, the maximum torque/current control is employed when $\omega_m \leq$ v1 and the flux-weakening control is employed when v1 < $\omega_m \leq$ v2.

That is, when the rotational speed $\omega_m$ exceeds the speed v2, the controller (209) causes the output circuit (210) to output, to the electric motor (1), the instantaneous actual electric power Po larger than the value of the instantaneous actual electric power in a case in which the flux-weakening control is performed.

Fig. 22 is a block diagram illustrating a first modification of the controller (209). The first modification illustrates only an extracted periphery of the current command generating unit (211) and the current controller (212) illustrated in Fig. 2. In the first modification, a limiter (219) is provided between the current command generating unit (211) and the current controller (212) in the controller (209), and the command value $i_d^*$ of the d-axis current $i_d$ is limited to less than or equal to an upper limit value $i_{dlim}$. Specifically, if the command value $i_d^*$ obtained from the current command generating unit (211) exceeds the upper limit value $i_{dlim}$, the limiter (219) inputs the upper limit value $i_{dlim}$ as the command value $i_d^*$ to the current controller (212).

In the first modification, an upper-limit-value calculating unit (220) is further provided in the controller (209). The upper-limit-value calculating unit (220) calculates the upper limit value $i_{dlim}$ by using the command value $i_q^*$ of the q-axis current $i_q$, the command value $\omega_m^*$ of the rotational speed $\omega_m$, and the upper limit value $\delta_{Co}$ of the axial deviation $5_C$. Expression (5) can be modified into Expression (14).

[Math. 14]

$$i_d = \frac{-b + \sqrt{b^2 - 4a\left(c + \dfrac{\omega_m^2 \left(k_A m_A r_A + k_C m_C r_C\right)}{k_B \delta_{co}}\right)}}{2a} \quad \cdots (14)$$

In Expression (14), the upper limit value $i_{dlim}$ can be calculated as the value of the d-axis current $i_d$ obtained by employing the command value $\omega_m^*$ as the rotational speed $\omega_m$.

As described above, in order to reduce the axial deviation $\delta_C$ as much as possible, the d-axis current $i_d$ is desirably the value (-b/2a). Thus, it is desirable not to satisfy $i_{dlim} < (-b/2a)$ . If $i_{dlim} < (-b/2a)$, for example, control for reducing the command value $\omega_m^*$ (drop control) is desirably performed.

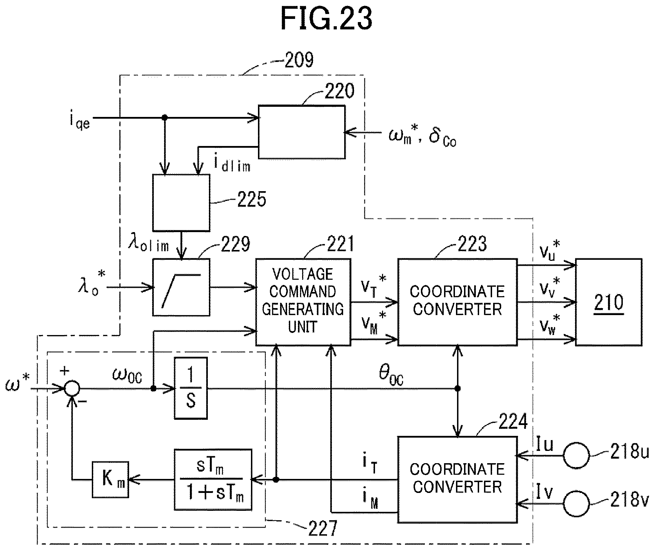

Fig. 23 is a block diagram illustrating a second modification of the controller (209). The second modification can be employed for so-called primary magnetic flux control in which the primary magnetic flux $\lambda_0$ is controlled.

The controller (209) includes, for example, a voltage command generating unit (221), coordinate converters (223, 224), and an angle calculating unit (227).

From a command value $\omega^*$ of a rotational speed $\omega$ as an electric angle and the T-axis current $i_T$, by using a known method, the angle calculating unit (227) obtains a rotational speed $\omega_{OC}$ of the M-axis and further obtains a position $\theta_{OC}$ of the M-axis. From the values of the alternating currents Iu and Iv and the position $\theta_{OC}$, the coordinate converter (224) obtains the M-axis current $i_M$ and the T-axis current $i_T$.

The voltage command generating unit (221) obtains the M-axis current $i_M$, the T-axis current $i_T$, and a command value $\lambda_0^*$ of the primary magnetic flux $\lambda_0$, and, from the rotational speed $\omega_{OC}$, a command value $v_T^*$ of a T-axis voltage $v_T$ and a command value $v_M^*$ of an M-axis voltage $v_M$.

From the command values $v_T^*$ and $v_M^*$ and the position $\theta_{OC}$, the coordinate converter (223) generates the three-phase voltage command values $v_u^*$, $v_v^*$, and $v_w^*$.

The controller (209) further includes a limiter (229), the upper-limit-value calculating unit (220), and an upper-limit-value calculating unit (225). The limiter (229) limits the command value $\lambda_0^*$ of the primary magnetic flux $\lambda_0$ to less than or equal to an upper limit value $\lambda_{0lim}$. Specifically, if the command value $\lambda_0^*$ exceeds the upper limit value $\lambda_{0lim}$, the limiter (229) inputs the upper limit value $\lambda_{0lim}$ as the command value $\lambda_0^*$ to the voltage command generating unit (221) .

The upper-limit-value calculating unit (220) can calculate the upper limit value $i_{dlim}$ as the value of the d-axis current $i_d$ obtained by employing the command value $\omega_m^*$ as the rotational speed $\omega_m$ and an estimated value $i_{qe}$ as the q-axis current $i_q$ in Expression (14).

The upper-limit-value calculating unit (225) can calculate the upper limit value $\lambda_{0lim}$ as the value of the primary magnetic flux $\lambda_0$ obtained by employing $i_d = i_{dlim}$ and $i_q = i_{qe}$ in Expression (11) .

Expression (12) can be modified into Expression (15). From Expressions (4) and (15), Expression (16) can be obtained. From Expression (16), if the load angle $\delta_0$ and the axial deviation $\delta_C$ are fixed, it is found that the square of the rotational speed $\omega_m$ is in direct proportion to a quadratic expression of the primary magnetic flux $\lambda_0$.

[Math. 15]

$$\begin{cases} i_d = \dfrac{\lambda_o \cos \delta_o - \Psi_a}{L_d} \\[2mm] i_q = \dfrac{\lambda_o \sin \delta_o}{L_q} \end{cases} \quad \cdots (15)$$

[Math. 16]

$$\omega_m^2 = -\frac{k_B \delta_{co}}{k_A m_A r_A + k_C m_C r_C} \left( a\left\{\frac{\lambda_o \cos\delta_o - \Psi_a}{L_d}\right\}^2 + b\left\{\frac{\lambda_o \cos\delta_o - \Psi_a}{L_d}\right\} + \frac{x}{g}\cdot\frac{\pi}{2\mu_0}\cdot\left\{\begin{array}{l}+\left(F_M^2\right)\left[\left(P_{d0}+P_{d1}\right)^2 + P_{d1}^2\right]\\+\left(F_D \frac{\lambda_o \sin\delta_o}{L_q}\right)^2\left[\left(P_{q0}-P_{q1}\right)^2 + P_{q1}^2\right]\end{array}\right\}\right)$$

$$= -\frac{k_B \delta_{co}}{k_A m_A r_A + k_C m_C r_C}\left(a\left\{\frac{\lambda_o \cos\delta_o - \Psi_a}{L_d}\right\}^2 + b\left\{\frac{\lambda_o \cos\delta_o - \Psi_a}{L_d}\right\} + d + e\left\{\frac{\lambda_o \sin\delta_o}{L_q}\right\}^2\right)$$

$$= -\frac{k_B \delta_c}{k_A m_A r_A + k_C m_C r_C}\left\{\left(\frac{a\cos^2\delta_o}{L_d^2} + \frac{e\sin^2\delta_o}{L_q^2}\right)\lambda_o^2 + \left(-\frac{a2\cos\delta_o \Psi_a}{L_d^2} + \frac{b\cos\delta_o}{L_d}\right)\lambda_o + \left(\frac{a\Psi_a^2}{L_d^2} - \frac{b\Psi_a}{L_d} + d\right)\right\}\cdots(16)$$

where

$$\left\{\begin{array}{l} d = \frac{x}{g}\cdot\frac{\pi}{2\mu_0}\left(F_M^2\right)\left[\left(P_{d0}+P_{d1}\right)^2 + P_{d1}^2\right]\\[3mm] e = \frac{x}{g}\cdot\frac{\pi}{2\mu_0}\left(F_D\right)^2\left[\left(P_{q0}-P_{q1}\right)^2 + P_{q1}^2\right]\end{array}\right.$$

The upper limit value $\lambda_{0lim}$ may also be obtained according to Expression (16) in which $\delta_C = \delta_{Co}$ and $\omega_m = \omega_m^*$.

As described above, the motor control apparatus (200) includes the PWM inverter (210b) and the controller (209). The PWM inverter (210b) outputs, to the electric motor (1), the application voltage Vs to be applied to the electric motor (1). The controller (209) controls operation of the PWM inverter (210b). The electric motor (1) drives the compression mechanism (20), which is the load, by using rotation of the shaft (10). The PWM inverter (210b) is included in the output circuit (210).

In the above-described embodiment, for example, in a case in which the predetermined torque τ is caused to be output from the electric motor (1),

(i) when the rotational speed $\omega_m$ is lower than or equal to the speed v1, as the rotational speed $\omega_m$ is higher, the amplitude |Vs| is larger (e.g., the maximum torque/current control or the maximum efficiency control);

(ii) the amplitude |Vs| when the rotational speed $\omega_m$ is higher than the speed v2 ($\geq$ v1) is less than the voltage value Vmax of the amplitude |Vs| at the speed v1 (the voltage reduction control); and

(iii) the amplitude |Vs| when the rotational speed $\omega_m$ is higher than the speed v1 and lower than or equal to the speed v2 is the voltage value Vmax (e.g., the flux-weakening control) .

For example, during the voltage reduction control, when the rotational speed $\omega_m$ is higher than the speed v2, as the rotational speed $\omega_m$ is higher, the amplitude |Vs| is smaller.

In a case in which the electric motor (1) is caused to generate the predetermined torque τ, when the rotational speed $\omega_m$ exceeds the speed v2, the controller (209) causes the PWM inverter (210b) to, for example:

(iia) output, to the electric motor (1), the alternating currents Iu, Iv, and Iw with the phase β larger than the phase β of the alternating currents Iu, Iv, and Iw output to the electric motor (1) when the flux-weakening control is applied at the speed;

(iib) output, to the electric motor (1), the alternating currents Iu, Iv, and Iw from which the current vector Ia with the current amplitude ia larger than the current amplitude ia of the current vector Ia of the alternating currents Iu, Iv, and Iw output to the electric motor (1) when the flux-weakening control is applied at the speed can be obtained;

(iic) output, to the electric motor (1), the alternating currents Iu, Iv, and Iw having a d-axis component (d-axis current $i_d$) smaller than the d-axis component (value $i_d$ of the d-axis current $i_d$) of the alternating currents Iu, Iv, and Iw output to the electric motor (1) when the flux-weakening control is applied at the speed;

(iid) output, to the electric motor (1), the alternating currents Iu, Iv, and Iw having a q-axis component (q-axis current $i_q$) smaller than the q-axis component (value $i_q$ of the q-axis current $i_q$) of the alternating currents Iu, Iv, and Iw output to the electric motor (1) when the flux-weakening control is applied at the speed;

(iie) output, to the electric motor (1), the alternating currents Iu, Iv, and Iw having a T-axis component (T-axis current $i_T$) larger than the T-axis component (value $i_T$ of the T-axis current $i_T$) of the alternating currents Iu, Iv, and Iw output to the electric motor (1) when the flux-weakening control is applied at the speed;

(iif) output, to the electric motor (1), the alternating currents Iu, Iv, and Iw that causes the electric motor (1) to generate the primary magnetic flux $\lambda_0$ with an amplitude smaller than the primary magnetic flux (more strictly, the value $\lambda_0$ of the amplitude) generated in the electric motor (1) when the flux-weakening control is applied at the speed;

(iig) output, to the electric motor (1), the alternating currents Iu, Iv, and Iw that causes the electric motor (1) to generate the primary magnetic flux $\lambda_0$ with a load angle $\delta_0$ larger than the load angle $\delta_0$ of the primary magnetic flux $\lambda_0$ generated in the electric motor (1) when the flux-weakening control is applied at the speed; or

(iih) output, to the electric motor (1), the instantaneous actual electric power Po larger than the instantaneous actual electric power Po generated in the electric motor (1) when the flux-weakening control is applied at the speed.

It is not always necessary to employ the maximum torque/current control, the maximum efficiency control, or the flux-weakening control. Typically, the maximum rotational speed of a motor employed in a product system is determined depending on the product system. The product system herein includes, in terms of the embodiment, the electric motor (1), the motor control apparatus (200), and the compression mechanism (20) driven by the electric motor (1). The maximum amplitude |Vs| depends on the rotational speed $\omega_m$.

For convenience of the following description, various quantities are defined. The maximum rotational speed $\omega_m$ of the electric motor (1) determined depending on the product system is a speed $\omega_{MAX}$. A possible maximum amplitude |Vs| when the electric motor (1) rotates at the speed $\omega_{MAX}$ is a voltage value $V_{max\_\omega MAX}$. A possible maximum amplitude |Vs| when the electric motor (1) rotates at a speed $\omega 3$ lower than the speed $\omega_{MAX}$ is a voltage value $V_{max\_\omega 3}$.

As described above, as the rotational speed is higher, the axial deviation $\delta_C$ is larger. The axial deviation $\delta_C$ can be decreased by decreasing the amplitude |Vs|. Thus, when the electric motor (1) rotates at the speed $\omega_{MAX}$, the PWM inverter (210b) desirably outputs the application voltage Vs smaller than the voltage value $V_{max\_\omega MAX}$.

On the other hand, in order to reduce current to be consumed, the amplitude |Vs| desirably becomes the possible maximum when the electric motor (1) rotates. Thus, at the at least one speed $\omega 3$, the PWM inverter (210b) desirably outputs the application voltage Vs with the amplitude |Vs| of the voltage value $V_{max\_\omega 3}$.

These can be summarized and expressed as follows:

(a) the PWM inverter (210b) is caused to output the application voltage Vs having the amplitude |Vs| smaller than the voltage value $V_{max\_\omega MAX}$, and the electric motor (1) is caused to rotate at the speed $\omega_{MAX}$ and drive a load (e.g., the compression mechanism (20)); and

(b) the PWM inverter (210b) is caused to output the application voltage Vs having the amplitude |Vs| of the voltage value $V_{max\_\omega 3}$, and the electric motor (1) is caused to rotate at the speed $\omega 3$ ($< \omega_{MAX}$) and drive the load; in which

(c) the voltage value $V_{max\_\omega MAX}$ is a possible maximum value of the amplitude |Vs| when the electric motor (1) drives the load at the speed $\omega_{MAX}$;

(d) the speed $\omega_{MAX}$ is a maximum of the rotational speed $\omega_m$ when the electric motor (1) drives the load;

(e) the voltage value $V_{max\_\omega 3}$ is a possible maximum value of the amplitude |Vs| when the electric motor (1) drives the load at the speed $\omega 3$; and

(f) the speed $\omega 3$ is lower than the speed $\omega_{MAX}$ (the above conditions are not necessarily satisfied at all rotational speeds $\omega_m$ smaller than the speed $\omega_{MAX}$).

In other words:

(g) at the speed $\omega_{MAX}$, the ratio of the amplitude |Vs| to the voltage value $V_{max\_\omega MAX}$ is smaller than 1; and

(h) at the certain speed $\omega 3$ lower than the speed $\omega_{MAX}$, the ratio of the amplitude |Vs| to the voltage value $V_{max\_\omega 3}$ is equal to 1.

Without limitation to when the electric motor (1) rotates at the speed $\omega_{MAX}$, as the rotational speed $\omega_m$ is higher, the axial deviation $\delta_C$ is larger. In addition, the voltage reduction control is performed at the rotational speed $\omega_m$ higher than or equal to the base speed (defined as a maximum rotational speed of the electric motor (1) at which the electric motor (1) can generate the torque $\tau$ during the maximum torque/current control or the maximum efficiency control). Thus, by adopting the base speed $\omega b$ when the electric motor (1) outputs the predetermined torque $\tau$, the speeds $\omega 1$ ($\geq \omega b$) and $\omega 2$ ($> \omega 1$), the voltage value $V_{max\_\omega 1}$ as the possible maximum of the amplitude |Vs| at rotation at the speed $\omega 1$, and the voltage value $V_{max\_\omega 2}$ as the possible maximum of the amplitude |Vs| at rotation at the speed $\omega 2$, there may be a relationship as follows.

When the electric motor (1) outputs the predetermined torque $\tau$,

(i) the ratio of the amplitude |Vs| to the voltage value $V_{max\_\omega 1}$ at the certain speed $\omega 1$, which is higher than or equal to the base speed $\omega b$ when the predetermined torque $\tau$ is output is a first ratio;

(j) the ratio of the amplitude |Vs| to the voltage value $V_{max\_}\omega 2$ at the certain speed $\omega 2$ higher than the speed $\omega 1$ is a second ratio; and

(k) the second ratio is smaller than the first ratio (the above conditions are not necessarily satisfied at all of two rotational speeds $\omega_m$ higher than or equal to the base speed $\omega b$).

In other words, in a case in which the rotational speed $\omega_m$ when the electric motor (1) outputs the predetermined torque $\tau$ is higher than or equal to the base speed $\omega b$ when the predetermined torque $\tau$ is output:

(l) the PWM inverter (210b) is caused to output the application voltage Vs having the amplitude |Vs| obtained by multiplying the voltage value $V_{max\_}\omega 1$ by the first ratio, the electric motor (1) is caused to rotate at the speed $\omega 1$, and the electric motor (1) is caused to output the torque $\tau$;

(m) the PWM inverter (210b) is caused to output the application voltage Vs having the amplitude |Vs| obtained by multiplying the voltage value $V_{max\_}\omega 2$ by the second ratio, the electric motor (1) is caused to rotate at the speed $\omega 2$, and the electric motor (1) is caused to output the torque $\tau$;

(n) the voltage value $V_{max\_}\omega 1$ is a possible maximum value of the amplitude |Vs| when the electric motor (1) outputs the torque $\tau$ at the speed $\omega 1$;

(o) the voltage value $V_{max\_}\omega 2$ is a possible maximum value of the amplitude |Vs| when the electric motor (1) outputs the torque $\tau$ at the speed $\omega 2$;

(p) the speed $\omega 2$ is higher than the speed $\omega 1$; and

(q) the second ratio is smaller than the first ratio.

For the relationship $\omega 2 > \omega 1 \geq \omega b$, the speed $\omega 2$ may be a possible maximum $\omega_{max}$ of the rotational speed $\omega_m$ when the electric motor (1) outputs the torque $\tau$. When $\omega 1 = v1$, $Vmax = V_{max\_}\omega 1$ is satisfied.

A case in which $v2 > \omega b$ and the torque $\tau$ is maintained is described with reference to Fig. 3 as an example. As described above, $v6 > v5 > v2$ is satisfied.

(1') The electric motor (1) is caused to rotate at the speed v5, and the amplitude |Vs| at this time has a value obtained by multiplying the first voltage value by the first ratio;

(m') the electric motor (1) is caused to rotate at the speed v6, and the amplitude |Vs| at this time has a value obtained by multiplying the second voltage value by the second ratio;

(n') the first voltage value is the possible maximum value of the amplitude |Vs| when the electric motor (1) outputs the torque $\tau$ at the speed v5;

(o') the second voltage value is the possible maximum value of the amplitude |Vs| when the electric motor (1) outputs the torque $\tau$ at the speed v6;

(p') the speed v6 is higher than the speed v5; and

(q') the second ratio is smaller than the first ratio.

By the above-described control, the radial stress at a specific rotational angle when the electric motor (1) is rotating is reduced. This contributes to reduction of the uneven contact of the shaft (10) to the bearing (14).

Although the power source that supplies the direct-current voltage Vdc is provided outside the motor control apparatus (200), the power source may alternatively be included in the motor control apparatus (200). The power source can be, for example, an AC/DC converter. The amplitude |Vs| of the application voltage Vs output from the PWM inverter (210b) in such a case will be described below.

The converter converts an alternating-current voltage Vin into the direct-current voltage Vdc. In this conversion, an alternating current Iin flows into the converter and a direct current Idc is output. A power factor $\cos\Phi in$ on the input side of the converter and a loss Ploss1 at the time of conversion of the converter are adopted.

In the following description, the PWM inverter (210b) outputs an alternating-current voltage Vout and an alternating current Iout. A power factor $\cos\Phi out$ on the output side of the PWM inverter (210b) and a loss Ploss2 at the time of conversion of the PWM inverter (210b) are adopted.

Regarding the converter, the following Expression (17) is satisfied based on the law of the conservation of energy. In the first expression, the second term on the right side indicates voltage drop attributed to the converter loss. A transformer ratio a of the converter is adopted.

[Math. 17]

$$Vdc = Vin \times a - Ploss1 / Idc, \quad a = Iin \times \cos\Phi in / Idc \quad \cdots (17)$$

Regarding the PWM inverter (210b), the following Expression (18) is satisfied based on the law of the conservation of energy. In the first expression, the second term on the right side indicates voltage drop attributed to the converter loss. A percent modulation b of the PWM inverter (210b) is adopted.
[Math. 18]

$$\text{Vout} = \text{Vdc} \times b - \text{Ploss2} / (\text{Iout} \times \cos\Phi\text{out}), \quad b = \text{Idc} / \text{Iout} / \cos\Phi\text{out} \qquad \cdots (18)$$

From Expressions (17) and (18), the following expression is satisfied.
[Math. 19]

$$\text{Vout} = (\text{Vin} \times a - \text{Ploss1} / \text{Idc}) \times b - \text{Ploss2} / (\text{Iout} \times \cos\Phi\text{out})$$
$$= \text{Vin} \times a \times b - b \times \text{Ploss1} / \text{Idc} - \text{Ploss2} / (\text{Iout} \times \cos\Phi\text{out}) \cdots (19)$$

From Expression (19), the alternating-current voltage Vout output from the PWM inverter (210b) is uniquely determined by the alternating-current voltage Vin converted by the converter, the transformer ratio a, the percent modulation b, the loss Ploss1 of the converter, the loss Ploss2 of the PWM inverter (210b), the direct current Idc input to the PWM inverter (210b), the alternating current Iout output from the PWM inverter (210b), and the power factor $\cos\Phi$out of the PWM inverter (210b). Note that the transformer ratio a, the percent modulation b, the losses Ploss1 and Ploss2, the direct current Idc, the alternating current Iout, and the power factor $\cos\Phi$out are uniquely determined if the product system that employs the motor to which voltage is applied from the PWM inverter (210b), and the torque and rotational speed of the motor are determined.
Thus, the amplitude |Vs| in the above embodiment is uniquely determined if the power source voltage, the product system, the torque $\tau$, and the rotational speed $\omega_m$ are determined. However, in a case in which the power source that supplies the direct-current voltage Vdc is an AC/DC converter, the amplitude |Vs| is also dependent on the alternating-current voltage Vin input to the converter.
The maximum of the amplitude |Vs| is further described. From Expression (19), the alternating-current voltage Vout becomes a maximum when the transformer ratio a and the percent modulation b are maximums. When maximums aMAX and bMAX of the transformer ratio a and the percent modulation b, respectively, are adopted, a maximum VoutMAX of the alternating-current voltage Vout is determined according to the following Expression (20).
[Math. 20]

$$\text{VoutMAX} = \text{Vin} \times \text{aMAX} \times \text{bMAX} - \text{bMAX} \times \text{Ploss1} / \text{Idc}$$
$$- \text{Ploss2} / (\text{Iout} \times \cos\Phi\text{out}) \quad \cdots (20)$$

The maximums aMAX and bMAX are each uniquely determined according to product system. As described above, the amplitude |Vs| is uniquely determined if the power source voltage, the product system, the torque $\tau$, and the rotational speed $\omega_m$ are determined. Thus, the maximum of the amplitude |Vs| is also uniquely determined if the power source voltage, the product system, the torque $\tau$, and the rotational speed $\omega_m$ are determined. For example, when the same torque $\tau$ is maintained in a certain product system at a certain power source voltage, the voltage values $V_{max\_\omega1}$, $V_{max\_\omega2}$, $V_{max\_\omega3}$, and $V_{max\_\omega MAX}$ are uniquely determined by the speeds $\omega1$, $\omega2$, $\omega3$, and $\omega_{MAX}$, respectively.
However, in a case in which the power source that supplies the direct-current voltage Vdc is an AC/DC converter, these voltage values are also dependent on the alternating-current voltage Vin input to the converter.

<<Structure of Electric Motor>>

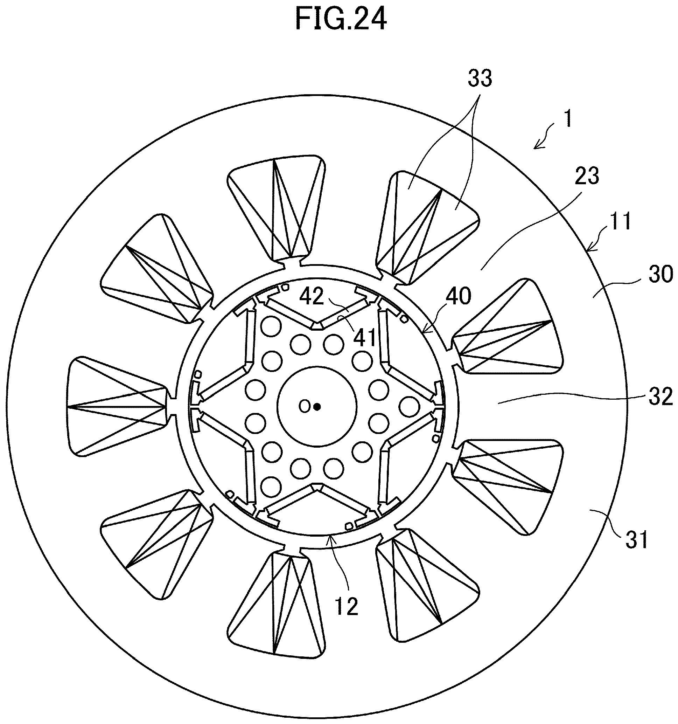

Next, the structure of the electric motor (1) according to this embodiment will be described with reference to Fig. 24 to Fig. 26.
As illustrated in Fig. 24, the stator (11) of the electric motor (1) includes a stator core (30) and coils (33) .
The stator core (30) includes a back yoke portion (31) and a plurality of teeth portions (32). The back yoke portion (31) is a portion formed as a substantially cylindrical shape. The back yoke portion (31) is formed of a magnetic material (e.g., electrical steel sheet).
The plurality of teeth portions (32) are portions that protrude from the inner circumference of the back yoke portion (31) toward the radially inward direction. The teeth portions (32) are formed as a single unit with the back yoke portion (31). Each of the teeth portions (32) is formed of a magnetic material (e.g., electrical steel sheet).
The coils (33) are wound around the plurality of teeth portions (32). The coils (33) are formed of an insulator-coated conductor (e.g., copper). A coil (33) is wound around each of the teeth portions (32) by concentrated winding. Note that the coils (33) may also be wound around the plurality of teeth portions (32) by distributed winding.

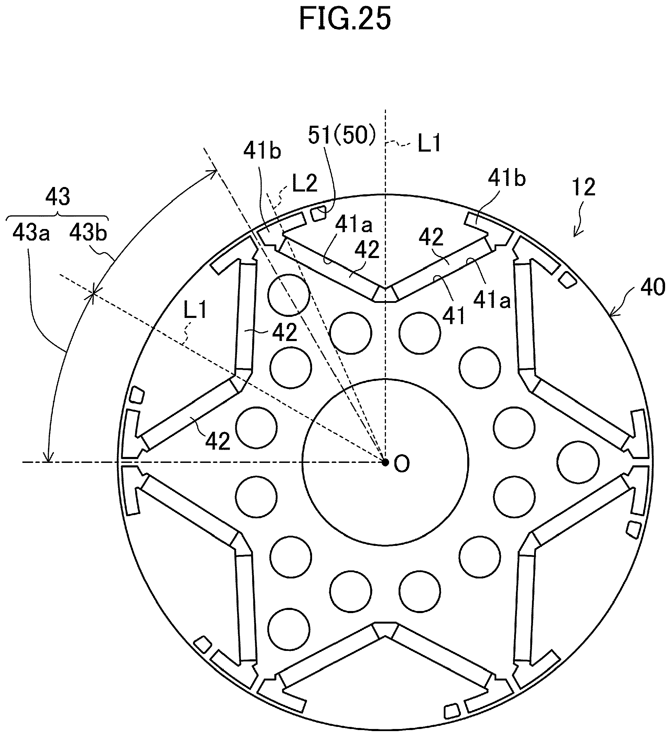

As illustrated in Fig. 24 and Fig. 25, the rotor (12) of the electric motor (1) includes a rotor core (40) and a plurality of permanent magnets (42).

The rotor core (40) is formed as a substantially cylindrical shape. The rotor core (40) is formed of a magnetic material (e.g., electrical steel sheet). In the rotor core (40), a plurality of magnet insertion holes (41) are formed to be arranged in the circumferential direction.

Each of the magnet insertion holes (41) is formed as a V shape having a convex toward the radially inward direction. Each of the magnet insertion holes (41) has two magnet insertion portions (41a) and two flux barrier portions (41b). The magnet insertion portions (41a) are portions that obliquely extend from the radially inward direction toward the radially outward direction. The flux barrier portions (41b) are cavity portions formed successively on the edge of the radially outward direction of the magnet insertion portions (41a). The flux barrier portions (41b) straightly extend along the outer circumferential surface of the rotor core (40).

Each of the permanent magnets (42) is formed as a flat rectangular parallelepiped. The permanent magnets (42) are inserted into the magnet insertion portions (41a) of the magnet insertion holes (41). For example, each of the permanent magnets (42) is, but not limited to, formed of a sintered magnet including a rare-earth element.

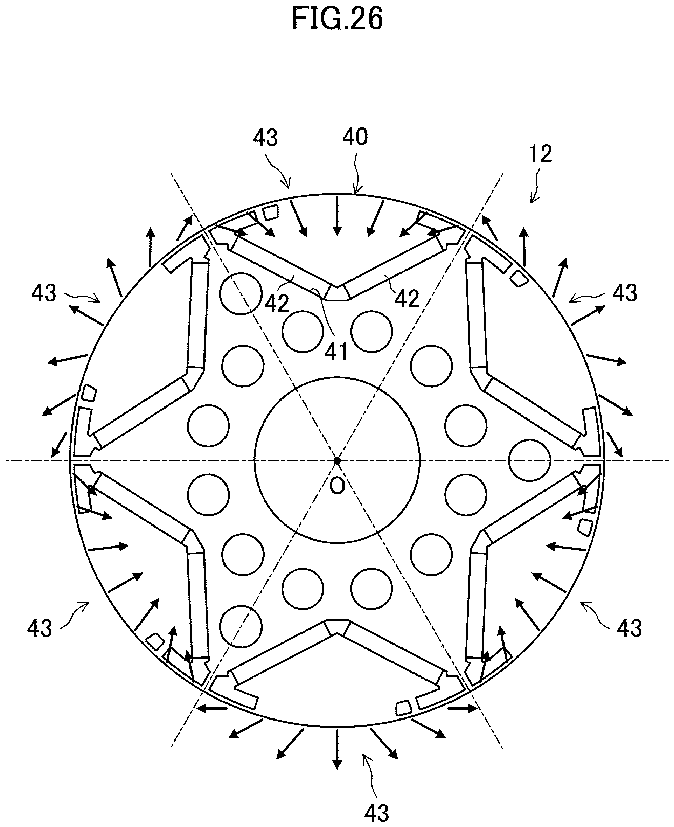

A pair of permanent magnets (42) inserted into the same magnet insertion hole (41) are magnetized so as to form one magnetic pole (43). The permanent magnets (42) in adjacent magnet insertion holes (41) form magnetic poles (43) having polarities opposite to each other. Herein, as illustrated in Fig. 26, "magnetic poles (43)" are regions obtained by dividing the rotor (12) in the circumferential direction depending on whether a magnetic field direction (denoted by arrows in Fig. 26) on a surface (specifically, outer circumferential surface) of the rotor (12) is the radially outward direction or the radially inward direction.

In this embodiment, six magnetic poles (43) having a substantially equal length in the circumferential direction are formed. Here, "length in the circumferential direction" of the magnetic pole (43) refers to the length in the circumferential direction of a region corresponding to each of the magnetic poles (43) on the outer circumferential surface of the rotor (12). In a case in which each of the magnetic poles (43) is divided into two, which are a rotation direction side and a reverse rotation direction side, relative to the pole center of the magnetic pole (43), the shape of a half portion (43a) on the rotation direction side and the shape of a half portion (43b) on the reverse rotation direction side are asymmetric about the pole center.

As illustrated in Fig. 25, in the rotor core (40), in a case in which each of the magnetic poles (43) is divided into two, which are the rotation direction side and the reverse rotation direction side, relative to the pole center of the magnetic pole (43), a cavity (51) as a magnetic resistance portion (51, 52) is formed in the half portion (43a) on the rotation direction side of all the magnetic poles (43). The cavity (51) is arranged in a more radially outward direction than the permanent magnet (42) in the rotor core (40). The cavity (51) is arranged between a straight line passing through an end portion on the rotation direction side in the permanent magnet (42) (more specifically, corner portion on the rotation direction side and the radially outward direction of the permanent magnet (42)) of the magnetic pole (43) and an axial center (O) of the rotor (12) and a straight line passing through the pole center of the magnetic pole (43) and the axial center (O) of the rotor (12).

The length in the circumferential direction of the cavity (51) is shorter than the length in the circumferential direction of the adjacent flux barrier portion (41b). The length in the radial direction of the cavity (51) is substantially equal to the length in the radial direction of the adjacent flux barrier portion (41b). The distance between the cavity (51) and the outer circumferential surface of the rotor (12) is substantially equal to the distance between the adjacent flux barrier portion (41b) and the outer circumferential surface of the rotor (12). The cavity (51) penetrates through the rotor core (40) in the axial direction. The cavity (51) forms magnetic saturation promoting means by which the half portion (43a) on the rotation direction side of the magnetic pole (43) is likely to be magnetically saturated.

-Effects of First Embodiment-

The electric motor (1) according to this embodiment includes the rotor (12) and the stator (11). The rotor (12) has the rotor core (40), the shaft (10) inserted into and fixed to the rotor core (40), and the plurality of permanent magnets (42) forming the plurality of magnetic poles (43) arranged in the circumferential direction. The magnetic poles (43) are regions obtained by dividing the rotor (12) in the circumferential direction depending on whether a magnetic field direction on a surface of the rotor (12) is a radially outward direction or a radially inward direction. The shaft (10) is rotatably supported on the rotor core (40) only on one side of an axial direction. In a case in which each of the magnetic poles (43) is divided into two, which are a rotation direction side and a reverse rotation direction side, relative to a pole center of the magnetic pole (43), the rotor core (40) has magnetic saturation promoting means (50) by which the half portion (43a) on the rotation direction side of at least one of the magnetic poles (43) each including a corresponding one of the permanent magnets (42) is likely to be magnetically saturated. The magnetic saturation promoting means (50) is provided in a more radially outward direction than the permanent magnet (42). A shape of the half portion (43a) on the rotation direction side and a shape of the half portion (43b) on the reverse rotation direction side are asymmetric about a straight line (L1) passing through the pole center of the magnetic pole (43) and the axial center (O) of the rotor (12). Thus, by the magnetic saturation promoting means (50), the half portion (43a) on the rotation direction side of the magnetic pole (43) is likely to be magnetically saturated. This can reduce unbalanced magnetic pull generated in the electric motor (1).

Here, a generation mechanism of the unbalanced magnetic pull and reasons why the unbalanced magnetic pull is reduced by magnetic saturation will be described.

First, the generation mechanism of the unbalanced magnetic pull will be described. If the rotor (12) is decentered, in a region where the rotor (12) and the stator (11) are close to each other, the magnetic flux amount increases, and the magnetic pull in the radial direction between the rotor (12) and the stator (11) increases. On the other hand, in a region where the rotor (12) and the stator (11) are away from each other, the magnetic flux amount decreases, and the magnetic pull in the radial direction between the rotor (12) and the stator (11) decreases. Thus, the force in the radial direction that acts on the rotor (12) is unbalanced, and the unbalanced magnetic pull is generated.

Next, the reasons why the unbalanced magnetic pull is reduced by magnetic saturation will be described. If the vicinity of the outer circumferential surface of the rotor (12) is magnetically saturated, in the region where the rotor (12) and the stator (11) are close to each other, the magnetic flux amount is unlikely to increase for the magnetic saturation, and thus, the magnetic pull in the radial direction between the rotor (12) and the stator (11) is also unlikely to increase. Furthermore, if the vicinity of the outer circumferential surface of the rotor (12) is magnetically saturated, in the region where the rotor (12) and the stator (11) are away from each other, the magnetic flux amount is unlikely to decrease for the magnetic saturation, and thus, the magnetic pull in the radial direction between the rotor (12) and the stator (11) is also unlikely to decrease. Therefore, the force in the radial direction that acts on the rotor (12) is unlikely to be unbalanced, and the unbalanced magnetic pull is reduced by magnetic saturation in the rotor (12).

Furthermore, reasons why the half portion (43a) on the rotation direction side of the magnetic pole (43) is likely to be magnetically saturated will also be described. The inventors of the subject application have found out that most of the force of the radial direction that causes the unbalanced magnetic pull is generated in the half portion (43a) on the rotation direction side of the magnetic pole (43). Thus, the inventors have enabled efficient reduction of the unbalanced magnetic pull by making the half portion (43a) on the rotation direction side of the magnetic pole (43) likely to be magnetically saturated.

In addition, in the electric motor (1) according to this embodiment, the shape of the half portion (43a) on the rotation direction side and the shape of the half portion (43b) on the reverse rotation direction side are asymmetric about a straight line (L1) passing through the pole center of the magnetic pole (43) and the axial center (O) of the rotor (12), and also, the magnetic pole (43) has a shape by which the half portion (43a) on the rotation direction side is more likely to be magnetically saturated than the half portion (43b) on the reverse rotation direction side. This can reduce the unbalanced magnetic pull generated in the electric motor (1) and also can generate a large reactance torque in the electric motor (1). This is because the half portion (43b) on the reverse rotation direction side of the magnetic pole (43), which is relatively unlikely to be magnetically saturated, can be effectively used as a magnetic flux path for generating the reactance torque.

In addition, in the electric motor (1) according to this embodiment, the magnetic saturation promoting means (50) is the magnetic resistance portion (51, 52) provided in the half portion (43a) on the rotation direction side of the magnetic pole (43) in a more radially outward direction than the permanent magnet (42) in the rotor core (40). Thus, by the magnetic resistance portion (51, 52), the half portion (43a) on the rotation direction side of the magnetic pole (43) is likely to be magnetically saturated.

In addition, in the electric motor (1) according to this embodiment, the magnetic resistance portion (51, 52) is arranged between a straight line (L2) passing through an end portion on the rotation direction side in the permanent magnet (42) of the magnetic pole (43) and the axial center (O) of the rotor (12) and the straight line (L1) passing through the pole center of the magnetic pole (43) and the axial center (O) of the rotor (12). Thus, by devising the arrangement of the magnetic resistance portion (51, 52), the unbalanced magnetic pull can be further reduced.

In addition, in the electric motor (1) according to this embodiment, the magnetic resistance portion (51, 52) is the cavity (51) formed in the rotor core (40). Thus, the magnetic resistance portion (51, 52) can be formed by the cavity (51) at a low cost.

In addition, in the electric motor (1) according to this embodiment, the rotor (12) has the balance weights (13a, 13c) provided on both an end side of the axial direction and another end side of the axial direction of the rotor core (40), and the center of gravity of each of the balance weights (13a, 13c) is decentered from the axial center (O) of the rotor (12). Thus, even if the balance weights (13a, 13c) each having the center of gravity decentered from the axial center (O) of the rotor (12) is provided, since the unbalanced magnetic pull is reduced, an axial runout of the shaft (10) can be suppressed.

In addition, the compressor (100) according to this embodiment includes the casing (15), the electric motor (1) accommodated in the casing (15), and the compression mechanism (20) accommodated in the casing (15) and configured to be driven by the electric motor (1). Thus, even if the compression mechanism (20) is rotationally driven at a high speed by the electric motor (1), since the unbalanced magnetic pull is unlikely to be generated in the electric motor (1), the compression mechanism (20) can be appropriately driven with the axial runout of the shaft (10) suppressed.

In addition, the electric motor system (MS) according to this embodiment includes the electric motor (1) configured to drive the compression mechanism (20) by using rotation of the shaft (10), the inverter (210b) configured to output the application voltage (Vs), which is a voltage to be applied to the electric motor (1), and the controller (209) configured to drive control the inverter (210b). The controller (209) is configured to cause the inverter (210b) to output the application voltage (Vs) having an amplitude smaller than the first maximum ($V_{max\_\omega MAX}$) and cause the electric motor (1) to rotate at the first speed ($\omega_{MAX}$) and drive the compression mechanism (20), and cause the inverter (210b) to output the application voltage (Vs) having an amplitude of the second maximum ($V_{max\_\omega 3}$) and cause the electric motor (1) to rotate at the second speed ($\omega 3$) and drive the compression mechanism (20). The first maximum ($V_{max\_\omega MAX}$) is a possible maximum value of the amplitude ($|Vs|$) of the application voltage when the electric motor (1) drives the compression mechanism (20) at the first speed ($\omega_{MAX}$). The first speed ($\omega_{MAX}$) is a maximum of the speed ($\omega_m$) of rotation of the electric motor when the electric motor (1) drives the compression mechanism (20). The second maximum ($V_{max\_\omega 3}$) is a possible maximum value of the amplitude ($|Vs|$) of the application voltage when the electric motor (1) drives the compression mechanism (20) at the second speed ($\omega 3$). The second speed ($\omega 3$) is lower than the first speed ($\omega_{MAX}$). Thus, by the predetermined control of the inverter (210b) by the controller (209), the unbalanced magnetic pull generated in the electric motor (1) can be reduced.

Here, predetermined control according to this embodiment and the electric motor (1) according to this embodiment are extremely compatible with each other in order to obtain the effect of reducing the unbalanced magnetic pull. Specifically, if the predetermined control according to this embodiment is applied to a typical electric motor, the magnetic saturation in a rotor is relieved by the control (this increases the unbalanced magnetic pull), and thus, the effect of reducing the unbalanced magnetic pull can only be obtained to some extent. In contrast, if the predetermined control according to this embodiment is applied to the electric motor (1) according to this embodiment, since the magnetic saturation promoting means (specifically, the cavity (51)) is present, almost no magnetic saturation in the rotor (12) is relieved even if the control is applied, and the effect of reducing the unbalanced magnetic pull can be obtained as much as possible.

In addition, the electric motor system (MS) according to this embodiment includes the electric motor (1) configured to drive the compression mechanism (20) by using rotation of the shaft (10), the inverter (210b) configured to output the application voltage (Vs), which is a voltage to be applied to the electric motor (1), and the controller (209) configured to control the inverter (210b). In a case in which the speed ($\omega_m$) of rotation of the electric motor (1) when the electric motor (1) outputs a predetermined torque is higher than or equal to the base speed ($\omega b$) of the electric motor (1) when the electric motor (1) outputs the predetermined torque, the controller (209) is configured to cause the inverter (210b) to output the application voltage (Vs) having an amplitude obtained by multiplying the first maximum ($V_{max\_\omega 1}$) by the first ratio, cause the electric motor (1) to rotate at the first speed ($\omega 1$), and cause the electric motor (1) to output the predetermined torque, and cause the inverter (210b) to output the application voltage (Vs) having an amplitude obtained by multiplying the second maximum ($V_{max\_\omega 2}$) by the second ratio, cause the electric motor (1) to rotate at the second speed ($\omega 2$), and cause the electric motor (1) to output the predetermined torque. The first maximum ($V_{max\_\omega 1}$) is a possible maximum value of the amplitude ($|Vs|$) of the application voltage when the electric motor (1) outputs the predetermined torque at the first speed ($\omega 1$). The second maximum ($V_{max\_\omega 2}$) is a possible maximum value of the amplitude ($|Vs|$) of the application voltage when the electric motor (1) outputs the predetermined torque at the second speed ($\omega 2$). The second speed ($\omega 2$) is higher than the first speed ($\omega 1$). The second ratio is smaller than the first ratio. Thus, by the predetermined control of the inverter (210b) by the controller (209), the unbalanced magnetic pull generated in the electric motor (1) can be reduced.

-Modification of First Embodiment-

A modification of the first embodiment will be described. The electric motor (1) according to this modification is different from that according to the first embodiment in the configuration of the magnetic saturation promoting means. Now, different points from the first embodiment will mainly be described.

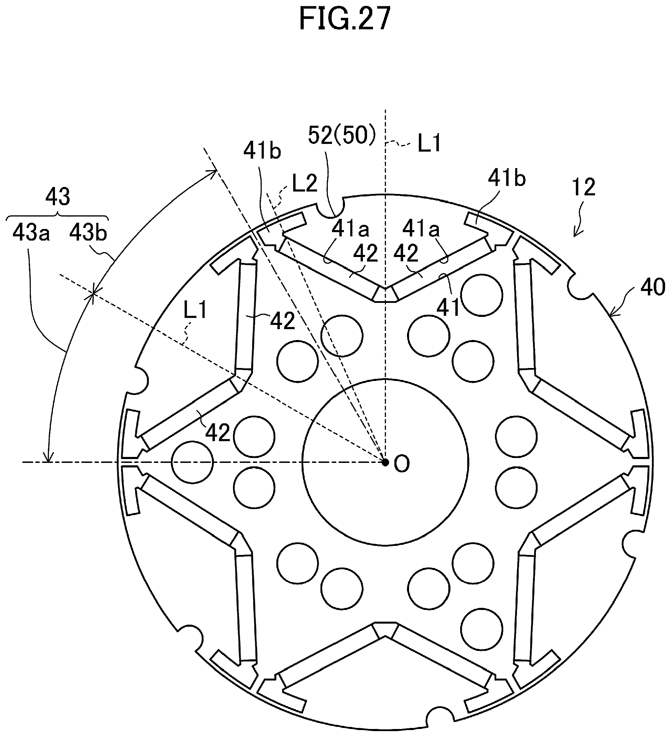

As illustrated in Fig. 27, on the outer circumferential surface of the rotor core (40), a concave portion (52) is formed for each of the magnetic poles (43). The concave portion (52) is provided on the half portion (43a) on the rotation direction side of all the magnetic poles (43). The concave portion (52) is arranged between the straight line passing through an end portion on the rotation direction side in the permanent magnet (42) (more specifically, corner portion on the rotation direction side and the radially outward direction of the permanent magnet (42)) of the magnetic pole (43) and the axial center (O) of the rotor (12) and the straight line passing through the pole center of the magnetic pole (43) and the axial center (O) of the rotor (12). The concave portion (52) extends over the entire length of the rotor core (40) in the axial direction. The concave portion (52) forms a magnetic resistance portion and forms the magnetic saturation promoting means.

-Effects of Modification of First Embodiment-

Effects that are substantially the same as those in the first embodiment can be obtained by the electric motor (1), the compressor (100), and the electric motor system (MS) according to this modification.
In addition, in the electric motor (1) according to this modification, the above magnetic resistance portion (51, 52) is the concave portion (52) formed on the outer circumferential surface of the rotor core (40). Therefore, the magnetic resistance portion (51, 52) can be formed by the concave portion (52) at a low cost.

<<Second Embodiment>>

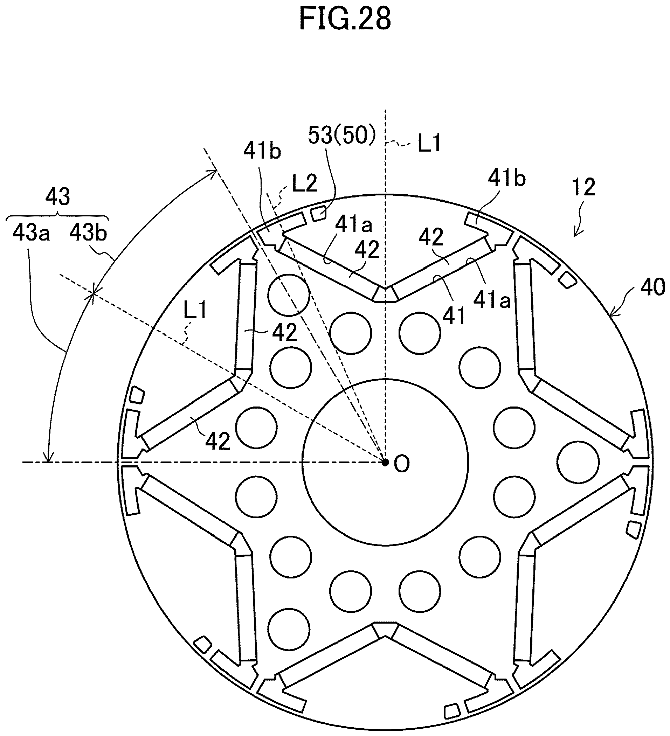

A second embodiment will be described. The electric motor (1) according to this embodiment is different from that according to the first embodiment in the configuration of the magnetic saturation promoting means. Now, different points from the first embodiment will mainly be described.
As illustrated in Fig. 28, in the rotor core (40), part of the half portion (43a) on the rotation direction side of the magnetic pole (43), the part being in a more radially outward direction than the permanent magnet (42), is an easy magnetic saturation portion (53). The easy magnetic saturation portion (53) is a portion formed of a magnetic material (e.g., permalloy, amorphous metal material, or ferrite) having a lower saturation magnetic flux density than the magnetic material (e.g., electrical steel sheet) forming the portion other than the half portion (43a). The shape and the arrangement are substantially the same as those of the cavity (51) according to the first embodiment. The easy magnetic saturation portion (53) forms the magnetic saturation promoting means.

-Effects of Second Embodiment-

Effects that are substantially the same as those in the first embodiment can be obtained by the electric motor (1), the compressor (100), and the electric motor system (MS) according to this embodiment.
In addition, in the electric motor (1) according to this embodiment, in the rotor core (40), at least part of the half portion (43a) on the rotation direction side of the magnetic pole (43), the part being in a more radially outward direction than the permanent magnet (42), is the easy magnetic saturation portion (53) formed of a magnetic material having a lower saturation magnetic flux density than the magnetic material forming the portion other than the half portion (43a). The easy magnetic saturation portion (53) forms the magnetic saturation promoting means (50). Therefore, by the easy magnetic saturation portion (53), the half portion (43a) on the rotation direction side of the magnetic pole (43) is likely to be magnetically saturated. This can reduce the unbalanced magnetic pull generated in the electric motor (1).

<<Third Embodiment>>

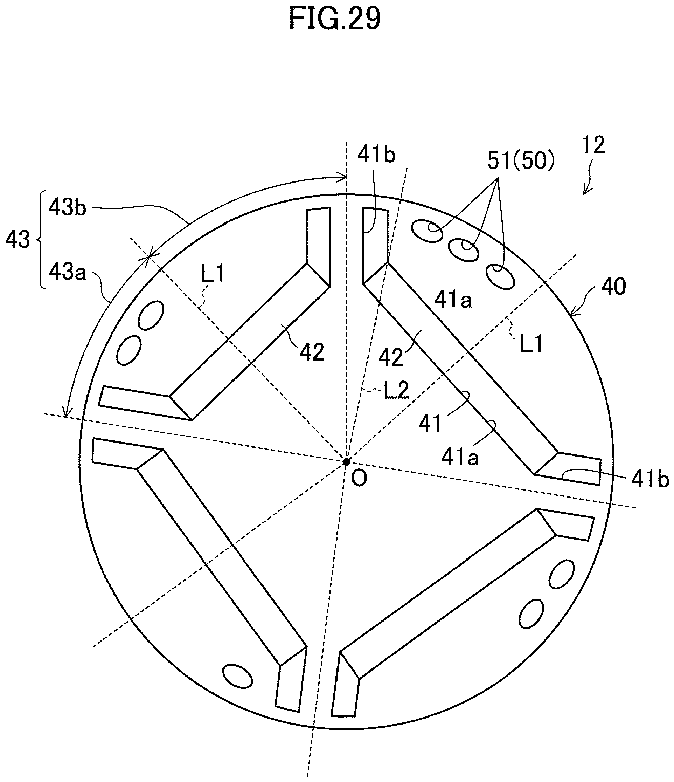

A third embodiment will be described. The electric motor (1) according to this embodiment is different from that according to the first embodiment mainly in the number and the configuration of the magnetic poles (43) in the first embodiment. Now, different points from the first embodiment will mainly be described.
As illustrated in Fig. 29, in the rotor core (40), four magnet insertion holes (41) are formed to be arranged in the circumferential direction. Each of the magnet insertion holes (41) has a magnet insertion portion (41a) extending linearly in the circumferential direction and flux barrier portions (41b) extending from both ends of the magnet insertion portion (41a) toward radially outward direction.
The four magnet insertion holes (41) have different lengths in the circumferential direction from one another. Specifically, the length in the circumferential direction of the upper-right magnet insertion hole (41) in Fig. 29 is the longest, the length in the circumferential direction of the lower-right and lower-left magnet insertion holes (41) in Fig. 29 is the second longest, and the length in the circumferential direction of the upper-left magnet insertion hole (41) in Fig. 29 is the shortest.
Four permanent magnets (42) inserted in the magnet insertion portions (41a) of the respective magnet insertion holes (41) have different lengths in the circumferential direction from one another. Specifically, the length in the circumferential direction of the upper-right permanent magnet (42) in Fig. 29 is the longest, the length in the circumferential direction of the lower-right and lower-left permanent magnets (42) in Fig. 29 is the second longest, and the length in the circumferential direction of the upper-left permanent magnet (42) in Fig. 29 is the shortest.
With such a structure, four magnetic poles (43) have different lengths in the circumferential direction from one another. Specifically, the length in the circumferential direction of the upper-right magnetic pole (43) in Fig. 29 is the longest, the length in the circumferential direction of the lower-right and lower-left magnetic poles (43) in Fig. 29 is the second longest, and the length in the circumferential direction of the upper-left magnetic pole (43) in Fig. 29 is the shortest.

In Fig. 29, three cavities (51) as the magnetic resistance portion (51, 52) are formed to be arranged in the circumferential direction in the upper-right magnetic pole (43), two cavities (51) as the magnetic resistance portion (51, 52) are formed to be arranged in the circumferential direction in the lower-right and upper-left magnetic poles (43), and one cavity (51) as the magnetic resistance portion (51, 52) is formed in the lower-left magnetic pole (43).

-Effects of Third Embodiment-

Effects that are substantially the same as those in the first embodiment can be obtained by the electric motor (1), the compressor (100), and the electric motor system (MS) according to this embodiment.

<<Other Embodiments>>

The above embodiments may also employ the following configuration.

For example, although the magnetic saturation promoting means (50) is provided in all the magnetic poles (43) in each of the above embodiments, the magnetic saturation promoting means (50) may alternatively be provided only in one or some of the magnetic poles (43).

In addition, for example, the magnetic pole (43) of the rotor (12) may have a shape by which the half portion (43b) on the reverse rotation direction side is more likely to be magnetically saturated than the half portion (43a) on the rotation direction side.

In addition, the number of magnetic poles (43) of the rotor (12) is not limited to those in the above embodiments. The number of permanent magnets (42) of the magnetic poles (43) is not limited to those in the above embodiments either.

In addition, although the electric motor (1) is an interior magnet synchronous motor in each of the above embodiments, the electric motor (1) is not limited to this type. For example, the electric motor (1) may also be a consequent-pole electric motor.

Although the embodiments and modifications have been described above, it should be understood that various modifications can be made for forms or details without departing from the spirit and scope of the claims. The above embodiments and modifications can be combined or substituted unless the function of the subject matter of the present disclosure is degraded.

Industrial Applicability

As described above, the present disclosure is useful for an electric motor and an electric motor system provided with the same.

Reference Signs List

1 electric motor
10 shaft
11 stator
12 rotor
13a, 13b balance weight (weight)
20 compression mechanism (load)
40 rotor core
42 permanent magnet
43 magnetic pole
43a half portion on rotation direction side
43b half portion on reverse rotation direction side
50 magnetic saturation promoting means
51 cavity (magnetic resistance portion)
52 concave portion (magnetic resistance portion)
53 easy magnetic saturation portion
209 controller (control unit)
210 PWM inverter (inverter)
L1 straight line (passing through pole center and axial center)
L2 straight line (passing through end portion of permanent magnet and axial center)
O axial center

**Claims**

1. An electric motor (1) comprising:

   a rotor (12); and
   a stator (11), wherein
   the rotor (12) has a rotor core (40), a shaft (10) inserted into and fixed to the rotor core (40), and a plurality of permanent magnets (42) forming a plurality of magnetic poles (43) arranged in a circumferential direction,
   the magnetic poles (43) are regions obtained by dividing the rotor (12) in the circumferential direction depending on whether a magnetic field direction on a surface of the rotor (12) is a radially outward direction or a radially inward direction,
   the shaft (10) is rotatably supported on the rotor core (40) only on one side of an axial direction,
   in a case in which each of the magnetic poles (43) is divided into two, which are a rotation direction side and a reverse rotation direction side, relative to a pole center of the magnetic pole (43), the rotor core (40) has magnetic saturation promoting means (50) by which a half portion (43a) on the rotation direction side of at least one of the magnetic poles (43) each including a corresponding one of the permanent magnets (42) is likely to be magnetically saturated,
   the magnetic saturation promoting means (50) is provided in a more radially outward direction than the permanent magnet (42), and
   a shape of the half portion (43a) on the rotation direction side and a shape of a half portion (43b) on the reverse rotation direction side are asymmetric about a straight line (L1) passing through the pole center of the magnetic pole (43) and an axial center (O) of the rotor (12) .

2. The electric motor according to claim 1, wherein
   the magnetic saturation promoting means (50) is a magnetic resistance portion (51, 52) provided in the half portion (43a) on the rotation direction side of the magnetic pole (43) in a more radially outward direction than the permanent magnet (42) in the rotor core (40).

3. The electric motor according to claim 2, wherein
   the magnetic resistance portion (51, 52) is arranged between a straight line (L2) passing through an end portion on the rotation direction side in the permanent magnet (42) of the magnetic pole (43) and the axial center (O) of the rotor (12) and the straight line (L1) passing through the pole center of the magnetic pole (43) and the axial center (O) of the rotor (12).

4. The electric motor according to claim 2 or 3, wherein
   the magnetic resistance portion (51, 52) is a cavity (51) formed in the rotor core (40).

5. The electric motor according to claim 2 or 3, wherein
   the magnetic resistance portion (51, 52) is a concave portion (52) formed on an outer circumferential surface of the rotor core (40).

6. The electric motor according to claim 1, wherein

   in the rotor core (40), at least part of the half portion (43a) on the rotation direction side of the magnetic pole (43), the part being in a more radially outward direction than the permanent magnet (42), is an easy magnetic saturation portion (53) formed of a magnetic material having a lower saturation magnetic flux density than a magnetic material forming a portion other than the half portion (43a), and
   the magnetic saturation promoting means (50) includes the easy magnetic saturation portion (53).

7. The electric motor according to any one of claims 1 to 6, wherein

   the rotor (12) has a weight (13a, 13c) provided on at least one of an end side of the axial direction and another end side of the axial direction of the rotor core (40), and
   a center of gravity of the weight (13a, 13c) is decentered from the axial center (O) of the rotor (12).

8. A compressor comprising:

   a casing (15);

the electric motor (1) according to any one of claims 1 to 7 accommodated in the casing (15); and
a compression mechanism (20) accommodated in the casing (15) and configured to be driven by the electric motor (1).

9. An electric motor system (MS) comprising:

the electric motor (1) according to any one of claims 1 to 7, the electric motor (1) being an electric motor configured to drive a load (20) by using rotation of the shaft (10);
an inverter (210b) configured to output an application voltage (Vs), which is a voltage to be applied to the electric motor (1); and
a control unit (209) configured to control the inverter (210b), wherein
the control unit (209) is configured to

cause the inverter (210b) to output the application voltage (Vs) having an amplitude smaller than a first maximum ($V_{max\_}\omega_{MAX}$) and cause the electric motor (1) to rotate at a first speed ($\omega_{MAX}$) and drive the predetermined load (20), and
cause the inverter (210b) to output the application voltage (Vs) having an amplitude of a second maximum ($V_{max\_}\omega3$) and cause the electric motor (1) to rotate at a second speed ($\omega3$) and drive the predetermined load (20),

the first maximum ($V_{max\_}\omega_{MAX}$) is a possible maximum value of an amplitude ($|Vs|$) of the application voltage when the electric motor (1) drives the predetermined load (20) at the first speed ($\omega_{MAX}$) ,
the first speed ($\omega_{MAX}$) is a maximum of a speed ($\omega_m$) of rotation of the electric motor when the electric motor (1) drives the predetermined load (20),
the second maximum ($V_{max\_}\omega3$) is a possible maximum value of the amplitude ($|Vs|$) of the application voltage when the electric motor (1) drives the predetermined load (20) at the second speed ($\omega3$), and
the second speed ($\omega3$) is lower than the first speed ($\omega_{MAX}$).

10. An electric motor system (MS) comprising:

the electric motor (1) according to any one of claims 1 to 7, the electric motor (1) being an electric motor configured to drive a load (20) by using rotation of the shaft (10);
an inverter (210b) configured to output an application voltage (Vs), which is a voltage to be applied to the electric motor (1); and
a control unit (209) configured to control the inverter (210b), wherein
in a case in which a speed ($\omega_m$) of rotation of the electric motor (1) when the electric motor (1) outputs a predetermined torque is higher than or equal to a base speed ($\omega b$) of the electric motor (1) when the electric motor (1) outputs the predetermined torque, the control unit (209) is configured to

cause the inverter (210b) to output the application voltage (Vs) having an amplitude obtained by multiplying a first maximum ($V_{max\_}\omega1$) by a first ratio, cause the electric motor (1) to rotate at a first speed ($\omega1$), and cause the electric motor (1) to output the predetermined torque, and
cause the inverter (210b) to output the application voltage (Vs) having an amplitude obtained by multiplying a second maximum ($V_{max\_}\omega2$) by a second ratio, cause the electric motor (1) to rotate at a second speed ($\omega2$), and cause the electric motor (1) to output the predetermined torque,

the first maximum ($V_{max\_}\omega1$) is a possible maximum value of an amplitude ($|Vs|$) of the application voltage when the electric motor (1) outputs the predetermined torque at the first speed ($\omega1$),
the second maximum ($V_{max\_}\omega2$) is a possible maximum value of the amplitude ($|Vs|$) of the application voltage when the electric motor (1) outputs the predetermined torque at the second speed ($\omega2$),
the second speed ($\omega2$) is higher than the first speed ($\omega1$), and
the second ratio is smaller than the first ratio.

FIG.1

# FIG.2

# FIG.3

(a)

(b)

(c)

v3  v4  v1  v2  v5  v7  $\overrightarrow{\omega_m}$

v6

MAXIMUM TORQUE/
CURRENT CONTROL

FLUX-
WEAKENING
CONTROL

VOLTAGE
REDUCTION
CONTROL

# FIG.4

CONTROL DRIVING
VOLTAGE Vs

$\omega_m \leqq v1$ ⟵ S401 ⟶ $v2 < \omega_m$

$\omega_m$ ?

$v1 < \omega_m \leqq v2$

S402

MAXIMUM TORQUE/
CURRENT CONTROL

S403

$|Vs| = Vmax$

S404

$|Vs| < Vmax$

RETURN

# FIG.5

$\delta_{Co}$

$\delta_C$

v7

v6

v5

v1

v2

v4

v3

Vmax

$|Vs|$

# FIG.6

# FIG.7

EP 3 930 151 A1

# FIG.8

# FIG.9

# FIG.10

# FIG.11

# FIG.12

# FIG.13

# FIG.14

# FIG.15

# FIG.16

# FIG.17

# FIG.18

# FIG.19

# FIG.20

# FIG.21

# FIG.22

# FIG.23

# FIG.24

EP 3 930 151 A1

# FIG.25

42

# FIG.26

# FIG.27

# FIG.28

# FIG.29

**INTERNATIONAL SEARCH REPORT**

International application No.

PCT/JP2020/012648

A. CLASSIFICATION OF SUBJECT MATTER
H02K 1/27(2006.01)i; F04B 39/00(2006.01)i; H02K 1/22(2006.01)i; H02K 21/14(2006.01)i; H02P 27/06(2006.01)i
FI: H02K1/27 501M; H02K1/27 501A; H02K1/27 501K; H02K21/14 M; H02K1/22 A; H02P27/06; F04B39/00 106C
According to International Patent Classification (IPC) or to both national classification and IPC

B. FIELDS SEARCHED

Minimum documentation searched (classification system followed by classification symbols)
F04B39/00; H02K21/14; H02K1/22; H02K1/27; H02P27/06

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-027157 A (DAIKIN INDUSTRIES, LTD.) 04.02.2013 (2013-02-04) paragraphs [0040]-[0043], [0046], fig. 1 | 1-8 |
| Y | JP 2015-050803 A (TOSHIBA CORP.) 16.03.2015 (2015-03-16) paragraphs [0010]-[0012], [0014], [0020], fig. 1, 5 | 1-8 |
| Y | JP 2010-233393 A (NISSAN MOTOR CO., LTD.) 14.10.2010 (2010-10-14) paragraph [0025], fig. 4-5 | 6-8 |
| A | JP 2003-164178 A (DELTA ELECTRONICS, INC.) 06.06.2003 (2003-06-06) entire text, all drawings | 9-10 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 June 2020 (02.06.2020) | 16 June 2020 (16.06.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application no.

PCT/JP2020/012648

| Patent Documents referred in the Report | Publication Date | Patent Family | Publication Date |
|---|---|---|---|
| JP 2013-027157 A | 04 Feb. 2013 | (Family: none) | |
| JP 2015-050803 A | 16 Mar. 2015 | (Family: none) | |
| JP 2010-233393 A | 14 Oct. 2010 | (Family: none) | |
| JP 2003-164178 A | 06 Jun. 2003 | US 2004/0247449 A1 entire text, all drawings DE 10231452 A1 CN 1721704 A | |

Form PCT/ISA/210 (patent family annex) (January 2015)

**EP 3 930 151 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017108626 A